# EUROPEAN PATENT SPECIFICATION

(11) **EP 3 190 763 B1**
(45) Date of publication and mention of the grant of the patent: **05.01.2022**
(21) Application number: 14905383.7
(22) Date of filing: 03.11.2014
(51) Int. Cl.: H04L 29/06, G06F 3/14

(54) **SCREEN SHARING METHOD AND SHARING DEVICE**
VERFAHREN ZUR GEMEINSAMEN BILDSCHIRMNUTZUNG UND VORRICHTUNG ZUR GEMEINSAMEN NUTZUNG
PROCÉDÉ DE PARTAGE D'ÉCRAN ET DISPOSITIF DE PARTAGE

(43) Date of publication of application: 12.07.2017
(73) Proprietor: Huawei Technologies Co., Ltd., Longgang District Shenzhen, Guangdong 518129 (CN)
(72) Inventor: LI, Xiaoxian, Shenzhen Guangdong 518129 (CN); DING, Zhiming, Shenzhen Guangdong 518129 (CN); LIU, Zhu, Shenzhen Guangdong 518129 (CN)
(74) Representative: Körber, Martin Hans
(86) International application number: PCT/CN2014/090155
(87) International publication number: WO 2016/070305

(56) References cited:
- WO-A1-2013/182159
- CN-A- 103 200 300
- CN-A- 103 701 927
- CN-A- 103 916 697
- US-A- 5 107 443
- US-A1- 2010 131 868
- US-A1- 2012 036 452
- None

## Description

### TECHNICAL FIELD

The present invention relates to the field of intelligent terminals, and in particular, to a screen sharing method and a sharing device.

### BACKGROUND

Screen sharing of a wireless device is also referred to as screen mirroring, and refers to that after a wireless connection is established between two or more electronic devices, one electronic device sends image data of its screen to a screen of another electronic device that has a communication connection to the electronic device, so that the another device that has a communication connection to the electronic device displays an image in real time according to the image data sent by the device. The device that shares the image data of the screen of the device is referred to as a sharing device, and the device that receives the image data and that displays the image according to the received image data is referred to as a receiving device. By means of screen mirroring, multiple users in a small area may browse photos together, play games together, share and view file data, or perform other operations, thereby improving the fun and applicability of electronic devices.

Currently, there are some dedicated protocols to implement interconnection between different brands. For example, a dedicated protocol is the Wi-Fi Display protocol formulated by the Wi-Fi Alliance (Wi-Fi Alliance, WFA for short), and the protocol is also referred to as the Miracast protocol. In addition, some manufacturers implement screen mirroring according to a proprietary protocol, and it is ensured that interconnection can be implemented between only devices that support the proprietary protocol. In a conventional screen sharing solution, a sharing device encodes screen image data in a video RAM into a video stream in real time, and then sends the video stream to a receiving device. After receiving the video stream, the receiving device generates a received picture according to the video stream, and performs display on a screen, so that the receiving device and the sharing device can present an identical picture. In addition, the receiving device may further control the sharing device. For example, when a user of the receiving device taps an icon of an application program of the received picture on the screen of the receiving device, a touch event is converted into a control instruction and the control instruction is returned to the sharing device. The sharing device makes a response to the control instruction, and projects a picture onto the receiving device in real time, so that the user of the receiving device may see execution of the touch event, for example, may see data of the application program.

US5107443 A shows a method for sharing a workspace at a number of workstations within one system. The shared workspace comprises at least one region. The region in a shared workspace is "private" when its state within the system presenting the shared workspace is such that the system presents the region so that it is perceived differently by different users at different workstations or can respond differently to requests involving the region from different users or different workstations.

US2010131868 A1 shows a system comprising a presenter device and a consumer device. At the presenter device, a determination is made regarding which one or more predefined areas of the application window are to be limitedly shared. The application window is shared with the one or more viewer devices, while limiting sharing of the one or more predefined areas of the application window. Application windows are shared or non-shared and overlapping regions of shared and non-shared application windows are filled with arbitrary color. Predefined areas of an application window are determined as limitedly shared by the presenter device, i.e. html elements corresponding to predefined areas are marked as hidden in html code.

The inventor has researched the prior art and finds that when the prior art is used for screen sharing, a sharing device needs to send original image data corresponding to a user interface of an application menu to a receiving device, so that the user interface of the application menu is completely displayed on each receiving device, and a user may operate the sharing device by using any receiving device. This screen sharing manner is relatively primitive.

### SUMMARY

Aspects of the present invention provide a screen sharing method and a sharing device.

The present invention is defined by the screen sharing method of independent claim 1 and the sharing device of independent claim 9. Additional features of the invention are presented in the dependent claims. In the following, parts of the description and drawings referring to embodiments, which are not covered by the claims, are not presented as embodiments of the invention, but as examples useful for understanding the invention.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a flowchart of an embodiment of a screen sharing method according to the present invention;
FIG. 2A is a flowchart of another embodiment of a screen sharing method according to the present invention;
FIG. 2B to FIG. 2E are schematic diagrams of manners of connecting a sharing device and a receiving device according to the present invention;
FIG. 2F to FIG. 2I are schematic diagrams of a setting operation of a confidential area of a sharing device according to the present invention;
FIG. 2J is a schematic diagram of a screen display effect of a receiving device according to the present invention;
FIG. 2K is a flowchart of another embodiment of a screen sharing method according to the present invention;
FIG. 3 is a flowchart of another embodiment of a screen sharing method according to the present invention;
FIG. 4 is a flowchart of another embodiment of a screen sharing method according to the present invention;
FIG. 5 is a schematic diagram of an embodiment of a sharing device according to the present invention;
FIG. 6 is a schematic diagram of another embodiment of a sharing device according to the present invention;
FIG. 7 is a schematic diagram of another embodiment of a receiving device according to the present invention;
FIG. 8 is a schematic diagram of an embodiment of a sharing device according to the present invention; and
FIG. 9 is a schematic diagram of an embodiment of a receiving device according to the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention.

In the embodiments of the present invention, a sharing device is a device that provides screen data to another device, and a receiving device is a device that receives screen data. The sharing device and the receiving device are both devices that support a screen sharing function, and are, for example, mobile telephones, mobile computers, tablet computers, personal digital assistants (Personal Digital Assistant, PDA for short), media players, smart televisions, and wearable devices.

In the embodiments of the present invention, in the embodiments of the present invention, a user interface (User Interface, UI for short) refers to a medium for performing interaction and information exchange between a device and a user, and implements conversion of information between a form inside a device and a form acceptable to a human.

A user interface of an application menu refers to a user interface in which application program icons are displayed in a menu form. The user interface of the application menu may include, but is not limited to, the following elements: a time, a battery status indicator, a Bluetooth indicator, one or more wireless communication signal strength indicators, and one or more application program icons. The wireless communication signal strength indicators may include one or more cellular signal indicators and a Wi-Fi signal indicator. The application program icon is used to activate a corresponding application program. The application icon may include an icon of a map application, a notepad application, an image management application, a camera application, a video player application, or another application.

The user interface of the application menu may include a notification bar area and a tray area. The time, the battery status indicator, the Bluetooth indicator, and the wireless communication signal strength indicators may be set in the notification bar area. Application program icons of frequently used applications such as a telephone application, an SMS message application, an email client application, and a browser application may be set in the tray area.

In the embodiments of the present invention, a display object refers to an element or a set of elements included in a user interface of an application menu. For example, the display object may include one or a set of multiple of elements such as a time display, a battery status indicator, a Bluetooth indicator, a wireless communication signal strength indicator, and an application program icon. A device may reconstruct the user interface of the application menu according to description information of all or some of the display objects in the user interface of the application menu.

A confidential display object is a part of the display objects included in the user interface of the application menu. Leakage of privacy of a user on a sharing device may be caused by information provided by the confidential display object to the user or an activatable application program corresponding to the confidential display object. The confidential display object may include an icon of an application program such as mobile banking, a payment application, email, an SMS message inbox, an instant application, or a picture browser.

A nonconfidential display object refers to remaining display objects of the display objects included in the user interface of the application menu except the confidential display object. Usually no leakage of privacy of the user in the sharing device is caused by information provided by the nonconfidential display object to the user or an activatable application program corresponding to the nonconfidential display object. The nonconfidential object may include a display object such as a time display, a battery status indicator, a Bluetooth indicator, or a wireless communication signal strength indicator.

A preset display object refers to one or more display objects that are of the display objects included in the user interface of the application menu and that are specified by an operating system of the sharing device or the user of the sharing device. According to a requirement, the preset display object may be considered as a nonconfidential display object, or may be considered as a confidential display object.

In the embodiments of the present invention, a confidential area is a partial area in the user interface of the application menu. Leakage of privacy of the user on the sharing device may be caused by information displayed in the confidential area or information provided to the user by an activatable application program corresponding to a display object in the area. The confidential area may be an area used to display an icon of an application program such as mobile banking, a payment application, email, an SMS message inbox, an instant application, or a picture browser.

A nonconfidential area is another partial area in the user interface of the application menu except the confidential area. Usually no leakage of privacy of the user in the sharing device is caused by information displayed in the nonconfidential area or information provided to the user by an activatable application program corresponding to a display object in the nonconfidential area. The nonconfidential area may include an area used to display the following display objects: display objects such as a time display, a battery status indicator, a Bluetooth indicator, and a wireless communication signal strength indicator.

A preset area refers to a partial area specified in advance by an operating system of the sharing device or the user of the sharing device in the user interface of the application menu. According to a requirement, the preset area may be considered as a nonconfidential area, or may be considered as a confidential area.

In the embodiments of the present invention, a predetermined trigger condition refers to a preset condition of triggering the sharing device to determine shareable image data. The sharing device may determine the shareable image data when the predetermined trigger condition is met. The predetermined trigger condition may be set by default by the sharing device, or is set in the sharing device by the user of the sharing device according to an actual requirement.

In the embodiments of the present invention, an operation instruction refers to an instruction sent by the user to the sharing device or the receiving device, and is used to instruct the sharing device or the receiving device to run a specified application program, display specified information in the user interface of the sharing device or the receiving device, send information to the sharing device or the receiving device, or perform another operation. The operation instruction may include a touch instruction, a speech instruction, a gesture instruction, and the like.

In the embodiments of the present invention, a trigger instruction refers to an instruction of the user used to trigger the sharing device to execute the step of determining shareable image data. The sharing device determines the shareable image data after receiving the trigger instruction sent by the user. The trigger instruction is one type of trigger condition, and is also one type of operation instruction.

In the embodiments of the present invention, a setting operation refers to an operation that is performed by the user on the sharing device and that is used to set a confidential area, a nonconfidential area, a confidential display object or a nonconfidential display object. The setting operation may be implemented by using an operation instruction.

In the embodiments of the present invention, original image data refers to all image data corresponding to the user interface of the application menu. Display or construction of a user interface consistent with the user interface of the application menu displayed on a screen of the sharing device may be completed according to the original image data.

In the embodiments of the present invention, the shareable image data refers to a part of image data corresponding to the user interface. The shareable image data may not include data that may cause leakage of private information of a user on the sharing device during screen sharing, and leakage of private information of the user in the sharing device may be reduced according to an image displayed by the shareable image data.

In the embodiments of the present invention, a control instruction refers to an instruction sent by the receiving device to the sharing device, and is used to instruct the sharing device or the receiving device to run a specified application program, display specified information on the user interface of the sharing device or the receiving device, send information to the sharing device or the receiving device, or perform another operation.

A control instruction corresponding to the operation instruction refers to a control instruction that has an effect that is the same as or corresponds to an effect of the operation instruction.

A display object corresponding to the control instruction refers to a display object specified by the control instruction, for example, an application program icon specified by the control instruction.

Making a response to the control instruction refers to that after receiving the control instruction, the sharing device runs a specified application program according to an indication of the control instruction or displays specified information in the user interface of the sharing device according to an indication of the control instruction.

Making no response to the control instruction refers to that after receiving the control instruction, the sharing device does not run a specified application program according to an indication of the control instruction or does not display specified information in the user interface of the sharing device according to an indication of the control instruction.

Ignoring the operation instruction refers to that the control instruction corresponding to the operation instruction is not generated, and optionally, another subsequent normal operation may continue to be performed, or refers to that although the control instruction corresponding to the operation instruction is generated, the generated control instruction is not sent to the sharing device, and optionally, another subsequent normal operation may continue to be performed.

In the embodiments of the present invention, an operation area refers to an area specified by the operation instruction or the control instruction in the user interface, for example, a touch area of a user during a touch operation, or an area determined according to coordinate information included in the control instruction. An operation area corresponding to the control instruction refers to an area specified by the control instruction. An operation area corresponding to the operation instruction refers to an area specified by the operation instruction.

An operation object refers to a display object specified by the operation instruction or the control instruction in the user interface, for example, an application program icon of the user during the touch operation, or an application program icon specified in the control instruction.

In the embodiments of the present invention, a shareable user interface refers to a user interface displayed according to the shareable image data.

In the embodiments of the present invention, that areas are overlapped refers to that when there are two areas in a same user interface, a part of one area is also a part of the other area.

The present invention is described in detail below with reference to the accompanying drawings.

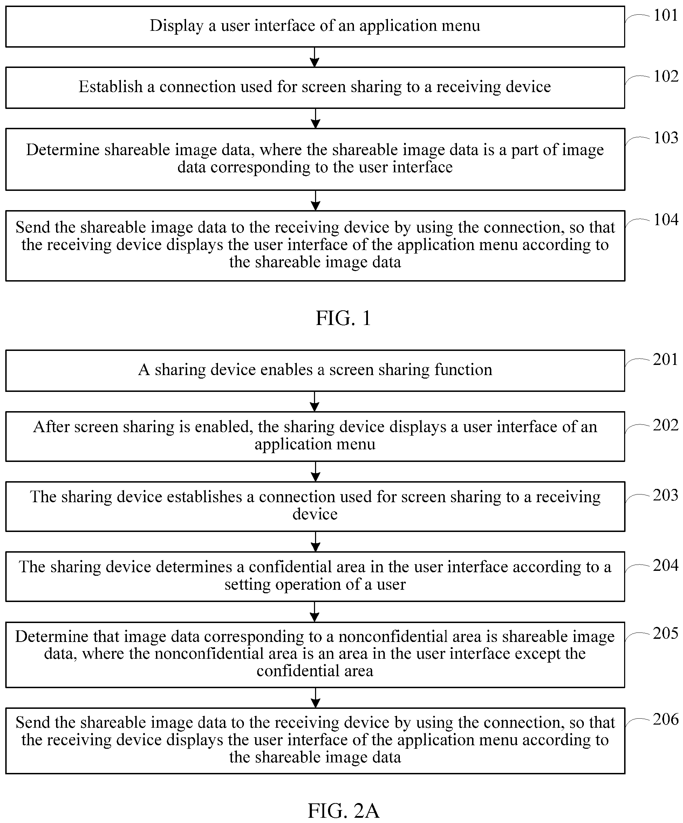

Referring to FIG. 1, FIG. 1 is a flowchart of an embodiment of a screen sharing method according to the present invention. This embodiment may be executed by a sharing device and is used for sharing a screen between the sharing device and a receiving device.

Step 101: Display a user interface of an application menu.

Before or after enabling a screen sharing function, the sharing device may display the user interface of the application menu.

Step 102: Establish a connection for screen sharing to the receiving device.

After enabling the screen function sharing, the sharing device may first enable a wireless connection function, so that the receiving device can establish a wireless connection to the sharing device, where the wireless connection is used to implement screen sharing, so that the receiving device can receive screen data of the sharing device, and can send a control instruction to the sharing device.

Step 103: Determine shareable image data, where the shareable image data is a part of image data corresponding to the user interface.

After the connection for screen sharing is established, the sharing device may determine the shareable image data, where the shareable image data is a part of the image data corresponding to the user interface.

In a possible implementation manner, before the determining shareable image data, the sharing device may determine a confidential area in the user interface according to a preset area or a setting operation of a user; and then determine that image data corresponding to a nonconfidential area is the shareable image data, where the nonconfidential area is an area in the display interface except the confidential area.

Before the determining a confidential area in the user interface according to a setting operation of a user, the sharing device may further first receive the setting operation of the user; and during the determining a confidential area, may: use, as the confidential area, a rectangular area whose diagonal is a connecting line between an operation start point and an operation end point of the setting operation; or use, as the confidential area, a closed area formed by a trajectory of the setting operation; or use, as the confidential area, an area in which an operation object corresponding to the setting operation is displayed.

In another possible implementation manner, before the determining shareable image data, the sharing device may also determine a nonconfidential area in the user interface according to a preset area or a setting operation of a user, where the nonconfidential area is a partial area in the user interface; and then determine that image data corresponding to the nonconfidential area is the shareable image data.

Before the determining a nonconfidential area in the user interface according to a setting operation of a user, the sharing device may also first receive the setting operation of the user; and then: use, as the nonconfidential area, a rectangular area whose diagonal is a connecting line between an operation start point and an operation end point of the setting operation; or use, as the nonconfidential area, a closed area formed by a trajectory of the setting operation; or use, as the nonconfidential area, an area in which an operation object corresponding to the setting operation is displayed.

In another possible implementation manner, before the determining sharing data, the sharing device may determine a confidential display object in the user interface according to a preset area or a setting operation of a user, where the confidential display object is a part of at least two display objects; and then determine that image data corresponding to a nonconfidential display object is the shareable image data, where the nonconfidential display object is a display object of the at least two display objects except the confidential display object.

Before the determining a confidential display object in the user interface according to a setting operation of a user, the sharing device may first receive the setting operation of the user; and during determining the confidential display object in the user interface, may: use, as the confidential display object, a display object in a rectangular area whose diagonal is a connecting line between an operation start point and an operation end point of the setting operation; or use, as the confidential display object, a display object in a closed area formed by a trajectory of the setting operation; or use, as the confidential display object, an operation object corresponding to the setting operation.

In another possible implementation manner, before the determining shareable image data, the sharing device may also determine a nonconfidential display object in the user interface according to a setting operation of a user or a preset display object, where the nonconfidential display object is a part of at least two display objects; and then determine that image data corresponding to the nonconfidential display object is the shareable image data.

Before the determining a confidential display object in the user interface according to a setting operation of a user, the sharing device may also first receive the setting operation of the user; and then: use, as the nonconfidential display object, a display object in a rectangular area whose diagonal is a connecting line between an operation start point and an operation end point of the setting operation; or use, as the nonconfidential display object, a display object in a closed area formed by a trajectory of the setting operation; or use, as the nonconfidential display object, an operation object corresponding to the setting operation.

Before the determining shareable image data, the method further includes at least one of the following steps: receiving a trigger instruction entered by the user, where the trigger instruction is used to trigger execution of the determining shareable image data; or determining that an operation instruction entered by the user is not received within a predetermined time period; or determining that a quantity of receiving devices that have established a connection to the sharing device exceeds a predetermined value. The sharing device may determine the shareable image data after receiving the trigger instruction entered by the user, determine the shareable image data after receiving the trigger instruction entered by the user, so that the user may determine, according to a requirement, when to determine the shareable image data, facilitating use by the user. Alternatively, the sharing device may determine the shareable image data when the operation instruction entered by the user is not received within a predetermined time period, determine the shareable image data when the operation instruction entered by the user is not received within a predetermined time period, so that security problems that occurs when the user does not operate the sharing device for a long time can be decreased. Alternatively, the sharing device may determine the shareable image data when a quantity of receiving devices that have established a connection to the sharing device exceeds a predetermined value, determine the shareable image data when a quantity of receiving devices that have established a connection to the sharing device exceeds a predetermined value, so that security problems that occurs when there is a large quantity of receiving devices can be decreased.

Step 104: Send the shareable image data to the receiving device by using the connection, so that the receiving device displays the user interface of the application menu according to the shareable image data.

After the shareable image data is determined, the sharing device may send the shareable image data to the receiving device by using the connection. When sending the shareable image data, the sharing device may encode the shareable image data, and send the encoded shareable image data to the receiving device by using the connection. After receiving the encoded shareable image data, the receiving device decodes the encoded shareable image data and displays the decoded shareable image data.

When the shareable image data received by the receiving device is a corresponding picture or video stream, the picture or the video stream may be directly displayed. When the shareable image data received by the receiving device is description information, the receiving device may reconstruct a user interface of the application menu according to the description information and display the user interface of the application menu.

In this embodiment, a user interface of an application menu is displayed; a connection used for screen sharing is established to a receiving device; shareable image data is determined, where the shareable image data is a part of image data corresponding to the user interface; and the shareable image data is sent to the receiving device by using the connection, so that the receiving device displays the user interface of the application menu according to the shareable image data. When this embodiment is used for screen sharing, a sharing device may send shareable image data to only a receiving device, and the receiving device displays a user interface of an application menu according to the shareable image data, thereby making sharing of the user interface of the application menu more flexible and varied.

Referring to FIG. 2A, FIG. 2A is a flowchart of another embodiment of a screen sharing method according to the present invention. The present invention is further described below with reference to this embodiment.

Step 201: A sharing device enables a screen sharing function.

The sharing device first enables the screen sharing function and enters a screen sharing state. There are multiple methods for enabling a screen sharing function, and a different sharing device may use a different manner to enable the screen sharing function. For example, if a screen sharing application program is installed in the sharing device, after receiving an instruction, entered by a user, on opening the screen sharing application program, the sharing device enables the screen sharing function. If a setting option of the screen sharing function is provided in the sharing device, after the user chooses so that the screen sharing function, the screen sharing function is entered.

Step 202: After screen sharing is enabled, the sharing device displays a user interface of an application menu.

Before or after enabling the screen sharing function, the sharing device uses an image output apparatus of the sharing device to display the user interface of the application menu. The user interface may include multiple areas such as a notification bar area, a tray area, and an icon area.

Step 203: The sharing device establishes a connection used for screen sharing to a receiving device.

After the screen sharing function is enabled, a connection that is used for screen sharing and that is between the sharing device and the receiving device is established.

After enabling the screen function sharing, the sharing device turns on a wireless connection function, so that the receiving device can establish a connection used for screen sharing to the sharing device, which enables the receiving device to receive display data sent by the sharing device, and can enable the receiving device to send a control instruction to the sharing device. The connection that is used for sharing a screen may be specifically implemented according to any feasible wireless communication protocol, for example, the IEEE 802.15 protocol, or the IEEE 802.11 protocol, which includes, but is not limited to, Bluetooth, ZigBee ZigBee, and 802.11b/g/n/ac/ad/ah.

Using the IEEE 802.11 protocol as an example, an AP-STA (Access Point-Station, access point-station) mode, a wireless P2P (Peer to Peer) mode, an AP (Access Point) repeat mode, a direct tunnel connection mode and the like may be used to establish a connection between the sharing device and the receiving device.

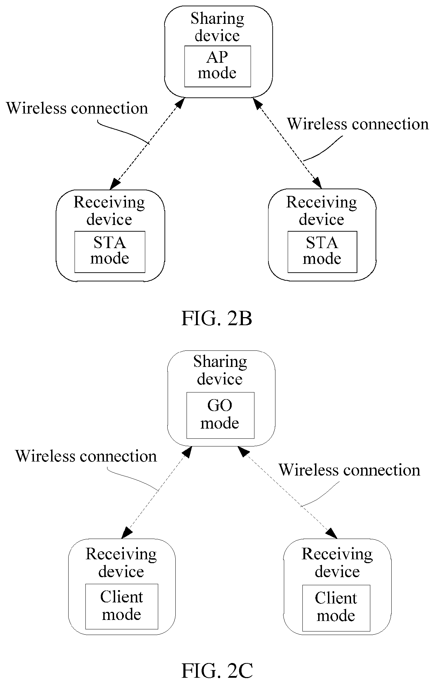

As shown in FIG. 2B, the sharing device and the receiving device may establish a direct connection by using an AP-STA mode. The sharing device may be used as a wireless AP, and the receiving device is used as a STA to discover the sharing device and establish a connection to the sharing device.

As shown in FIG. 2C, the sharing device and the receiving device may be directly connected by using a Wi-Fi P2P mode. The sharing device may be used as a GO (Group Owner, group owner) device of a wireless P2P group, and the receiving device is used as a client (Client) device of the P2P group and is connected to the sharing device.

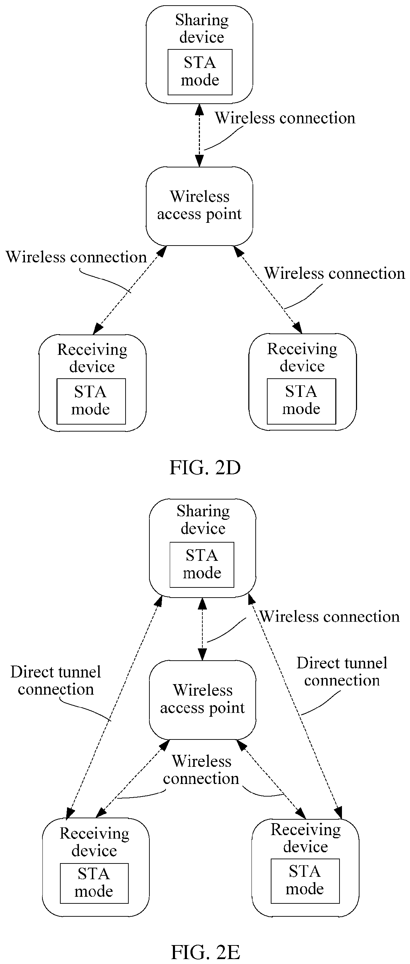

As shown in FIG. 2D, the sharing device may establish a connection to the receiving device by means of AP repeat. The sharing device and the receiving device are both used as STAs to establish a connection to a first AP. When display data needs to be transmitted, the sharing device sends the display data to the AP, and the AP then forwards the received display data to the receiving device.

As shown in FIG. 2E, the sharing device and the receiving device may establish a connection by using a direct tunnel connection mode. The sharing device and the receiving device are first used as STAs to separately establish a connection to a second AP, and subsequently a direct tunnel connection channel is established between the sharing device and the receiving device. When display data needs to be transmitted, the sharing device sends the display data to the receiving device by using the direct tunnel connection channel.

Only several feasible solutions are listed above, but the present invention is not limited thereto.

It should be noted herein that an execution order between step 202 and step 203 is not limited in the present invention.

Step 204: The sharing device determines a confidential area in the user interface according to a setting operation of a user.

There may be multiple types of setting operations of the user. For example, the user may complete the setting operation for the sharing device by using a peripheral device such as a mouse or a keyboard; or the setting operation may be completed in a touch manner; or the setting operation may be completed by means of speech or by using a gesture or in another non-contact manner. Only an example in which the user completes the setting operation in a touch manner is used for description below:

In a specific implementation manner, the sharing device may use, as the confidential area in the user interface, a rectangular area determined according to a touch trajectory of the user.

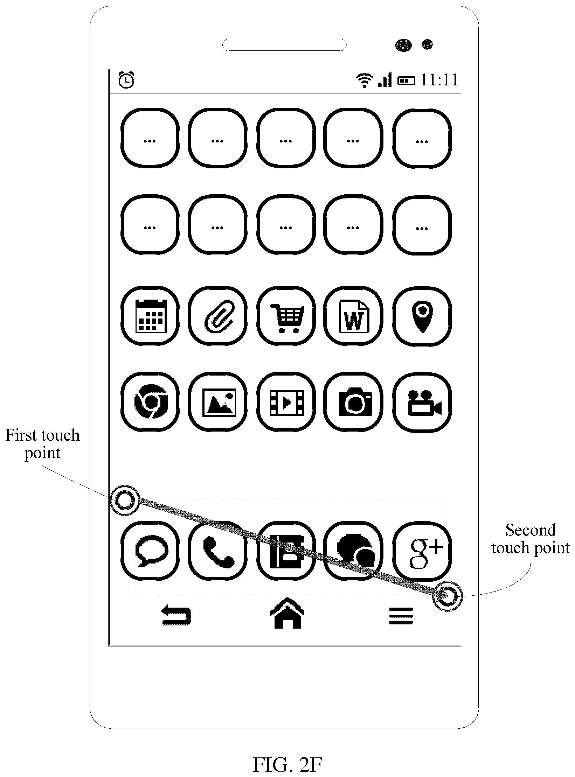

As shown in FIG. 2F, an operation start point of a touch operation of the user is used as a first touch point, an operation end point of the touch operation of the user is used as a second touch point, and a rectangle whose diagonal is a connecting line between the first touch point and the second touch point is the specified confidential area. Sides of a rectangular box are respectively parallel to sides of a display interface of a screen of the sharing device. The sharing device records location information of a current selected area.

In addition, the sharing device may further provide an option menu bar in a pop-up manner. The option menu bar is displayed in the middle of the screen. The user selects a desired operation from an option menu to complete a current setting of the confidential area. For example, the option menu has "Cancel", "Reselect", and "OK". When "Cancel" is selected, the current setting is abandoned, and a first mobile terminal may cancel display of the option menu, cancel display of a rectangular box of a selected area, cancel display of a translucent layer, and exit a setting mode. When "Reselect" is selected, it represents that the confidential area needs to be reset, the first mobile terminal cancels a rectangular box of a selected area and the option menu bar, and the user may reexecute a setting step. After "OK" is selected, the first mobile terminal cancels display of the option menu, receive a rectangular box of a selected confidential area, and records a current selected area.

In another specific implementation manner, the sharing device may use, as the confidential area in the user interface, a closed area formed by a touch trajectory of the user. The closed area formed by the touch trajectory refers to an area enclosed by the touch trajectory.

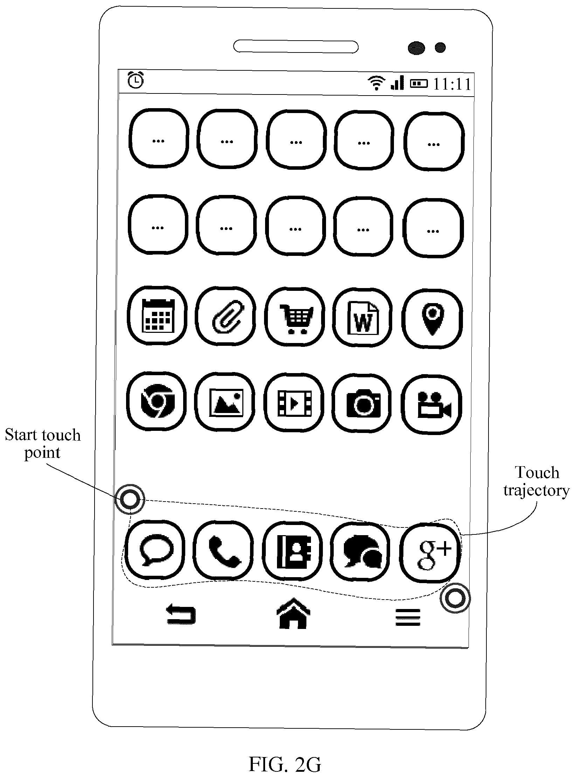

As shown in FIG. 2G, the user touches a start touch point with a finger or another body part, keeps contact, moves the finger to draw a circle, and finally returns to the start touch point and release the finger, so that an icon or a display section that needs to be confidential is included in the area enclosed by the touch trajectory of the finger. The area enclosed by the touch trajectory is the specified confidential area. Similarly, an option menu bar may also be provided in a pop-up manner, making it easy for the user to confirm the confidential area by using a preset menu. For a specific process, refer to the foregoing description.

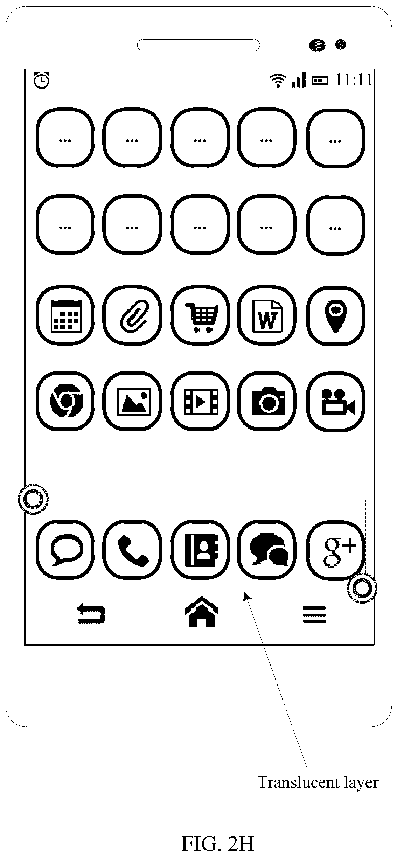

During the determining of a confidential area, a corresponding indication may also be provided in the user interface. As shown in FIG. 2H, for example, a finger is used to delimit a rectangular confidential area. The sharing device may cover the delimited confidential area with a new translucent layer, to prevent an application under the translucent layer from being triggered; or block the delimited confidential area directly, to prevent an application under the translucent layer from being triggered and seen. Most conventionally, the sharing device performs no processing on a screen, and only a screen is captured and processed at a processing unit, that is, a user of the sharing device sees a completely normal picture.

In another embodiment, the sharing device may also determine a nonconfidential area in the user interface according to the setting operation of the user. For example, the sharing device may use, as the nonconfidential area of the user interface, a rectangular area determined according to a touch trajectory of the user, or may use, as the nonconfidential area of the user interface, a closed area formed by a touch trajectory of the user. A manner of determining the nonconfidential area is similar to a manner of determining the confidential area, and no detailed description is provided herein.

In another embodiment, the sharing device may also determine a confidential display object in the user interface according to the setting operation of the user.

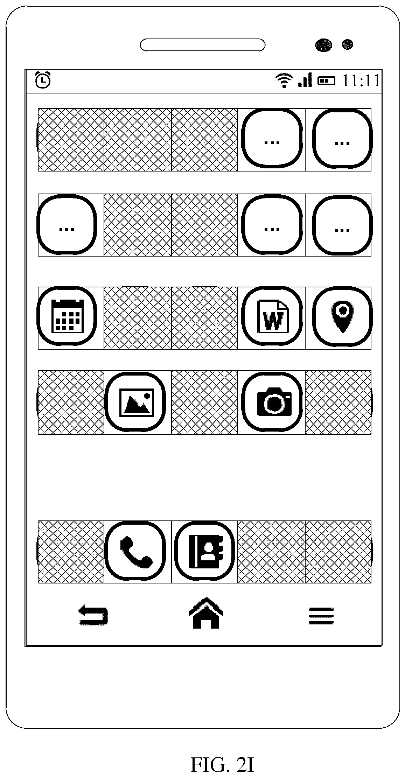

As shown in FIG. 2I, when the sharing device enters a confidential area setting state, each application program icon is processed to become clickable. The user clicks an application icon that needs to be confidential, and the corresponding application icon is the confidential display object. Similarly, an option menu bar may also be provided in a pop-up manner, making it easy for the user to confirm the confidential display object by using a preset menu. For a specific implementation manner of the preset menu, refer to the foregoing description.

In another embodiment, the sharing device may also determine a nonconfidential display object in the user interface according to the setting operation of the user. A manner of determining the nonconfidential display object is similar to the foregoing manner of determining the confidential display object, and no detailed description is provided herein.

In another embodiment, the sharing device may also use, after determining the confidential area, a display object included in the confidential area as the confidential display object, or the sharing device may also use, after determining the nonconfidential area, a display object included in the nonconfidential area as the nonconfidential display object.

In another embodiment, if the sharing device has saved positioning information of the confidential area, the nonconfidential area, the confidential display object or the nonconfidential display object, the sharing device may also determine the confidential area, the nonconfidential area, the confidential display object or the nonconfidential display object according to the saved positioning information.

In another embodiment, the sharing device may also use a preset area as the confidential area or the nonconfidential area according to a requirement, or may use a display object inside a preset area as the confidential display object or the nonconfidential display object.

For example, when the user interface of the application menu includes a tray area, the sharing device may directly use the tray area as the confidential area, or may use, as the confidential display object, an icon set in the tray area.

Step 205: Determine that image data corresponding to a nonconfidential area is shareable image data, where the nonconfidential area is an area in the user interface except the confidential area.

After the confidential area is determined, the receiving device first determines the nonconfidential area according to the confidential area, where the nonconfidential area is an area in the user interface except the confidential area; then determines that image data corresponding to the nonconfidential area is the shareable image data. If the sharing device has directly determined the nonconfidential area, the sharing device may directly determine that the image data corresponding to the nonconfidential area is the shareable image data.

An image of the nonconfidential area may be a picture. The picture displays a part of a picture corresponding to the application menu of the user interface. Because the application menu of the user interface is also displayed by a picture, and original display data usually includes pixels, a series of arrays may be used to represent the original display data, where each pixel may be represented by an array that includes a coordinate value and a color value as array elements, where the coordinate value denotes a location of the pixel point in the user interface, and the color value denotes a color of the pixel. An Android system device is used as an example. Original display data provided by a SurfaceFlinger service may be read, to obtain a series of arrays that include pixel point coordinates (X, Y) and pixel point RGB values as array elements. All arrays are combined to form the complete original display data. The original display data corresponding to the user interface of the application menu already exists in a video RAM module of the sharing device. Therefore, the sharing device may directly obtain the shareable image data from the video RAM module of the sharing device; or may first obtain the original image data from the video RAM module of the sharing device, and then generate the shareable image data according to the original image data.

In a possible implementation manner, the sharing device may also first determine all pixels inside the nonconfidential area, and then obtain arrays corresponding to these pixels from the video RAM module of the sharing device. Arrays corresponding to all the pixels inside the nonconfidential area are combined to form the shareable image data.

In another possible implementation manner, the sharing device may first obtain the original image data from the video RAM module, then delete a part, corresponding to the confidential area, in the original display data, and only keep a part of display data corresponding to the nonconfidential area as the shareable image data, or replace a part, corresponding to the confidential area, in the original display data with replacement data, so as to obtain the shareable image data.

When the confidential data, corresponding to the confidential area, in the original display data is replaced as replacement data, a new value may be assigned to a color value in an array corresponding to a pixel inside the confidential area, to make the replacement data be display data different from the confidential data, making an image of the confidential area be confidential. Screen data that is obtained after a color value of each pixel point inside the confidential area is assigned a new value is the shareable image data. For example, when a pixel is represented by an array that includes a coordinate value and an RGB value, an RGB value of each pixel point inside the confidential area may be represented by (0, 0, 0) or (255, 255, 255), that is, each pixel point inside the area is displayed to be black or white; or values may be individually assigned to pixel points inside the confidential area one by one according to a different display effect.

In another possible implementation manner, in another embodiment, after determining the confidential display object or the nonconfidential display object, the sharing device may determine that image data corresponding to the nonconfidential display object is the shareable image data, where the nonconfidential display object is a display object of the at least two display objects except the confidential display object.

For example, the sharing device may first determine the nonconfidential display object, obtain description information of all nonconfidential display objects, then use the description information of all the nonconfidential display objects as the shareable image data.

In another embodiment, before determining the shareable image data, the sharing device may further determine whether a trigger condition of determining the shareable image data is met. If the trigger condition is met, the sharing device determines the shareable image data, or if the trigger condition is not met, the sharing device may directly send the original display data to the receiving device.

In a possible implementation manner, reception of a trigger instruction entered by the user may be used as the trigger condition.

For example, the sharing device may determine whether a setting instruction used to set the confidential area in the user interface is received. If the setting instruction is received, the sharing device determines the shareable image data. If the setting instruction is not received, the sharing device does not need to determine the shareable image data. The setting instruction may be a speech instruction, a touch instruction, a gesture instruction or the like sent by the user.

In another possible implementation manner, whether a specific situation occurs within a predetermined time may be used as the trigger condition.

For example, the sharing device may determine whether no operation instruction entered by the user is received within a predetermined time period. If no operation instruction entered by the user is received within the predetermined time period, it indicates that the user has not performed any operation on the sharing device for a long time, and to prevent leakage of privacy of the user, the shareable image data may be determined. The predetermined time period is a time period arbitrarily set according to a requirement, for example, predetermined duration after a screen sharing function is enabled, or predetermined duration after an operation instruction of the user is received a previous time.

For another example, the sharing device may determine whether a cancel instruction that is entered by the user and that is used to cancel generation of the shareable image data is not received within a predetermined time period. If the cancel instruction is not received within the predetermined time period, the shareable image data is determined; or if the cancel instruction is received within the predetermined time period, the shareable image data does not need to be determined.

In another possible implementation manner, whether a particular service situation occurs in the sharing device may be used as the trigger condition.

For example, the sharing device may detect whether a quantity of receiving devices that have established a connection to the sharing device exceeds a predetermined value, or detect whether receiving devices that have established a connection to the sharing device include a predetermined device. If the sharing device finds that the quantity of receiving devices that have established a connection to the sharing device exceeds the predetermined value, or the receiving devices include a specific device or a specific type of devices, the shareable image data is generated; otherwise, the shareable image data does not need to be generated.

In another possible implementation manner, content included in the original display data may be used as the trigger condition. The sharing device may monitor a change in the original display data at any time, and generate the shareable image data when the original display data includes specific content.

For example, when finding that the original display data includes data corresponding to a picture of a specific application prompt such as an SMS message prompt, the sharing device generates the shareable image data.

It should be noted herein that, according to a different trigger condition, the sharing device may perform determining according to predetermined frequency after the screen sharing function is enabled, until a predetermined trigger condition is met or the screen sharing function is disabled.

It should be noted herein that, the present invention does not further limit an order of executing step 202, step 203, step 204, and step 205, and the order of executing the steps may be determined according to a requirement.

Step 206: Send the shareable image data to the receiving device by using the connection, so that the receiving device displays the user interface of the application menu according to the shareable image data.

After the shareable image data is generated, the sharing device may perform compression and encoding on the shareable image data, encapsulate a file that is obtained after the compression and encoding, to obtain a transmission stream, and then transmit the transmission stream, so as to send the shareable image data to the receiving device.

There are multiple manners of compression and encoding. For example, when the shareable image data corresponds to the nonconfidential area, a format of the shareable image data is usually a picture or a video stream. When compression and encoding are performed on the shareable image data, encoding may be performed on the shareable image data in an encoding manner provided in the H.264 standard. When encapsulation is performed on the shareable image data obtained after encoding, there may also be multiple encapsulation manners. For example, encapsulation may be performed following a PES encapsulation method, to further encode the shareable image data into an MPEG2-TS format for transmission. During transmission of a transmission stream, a manner of RTP transmission or another manner may be used. When the shareable image data is description information, compression may be performed on the description information to remove redundant data.

After receiving the shareable image data, the receiving device displays an image according to the shareable image data. When the shareable image data received by the receiving device is a corresponding picture or video stream, the picture or the video stream may be directly displayed. When the shareable image data received by the receiving device is description information, the receiving device may reconstruct a user interface of the application menu according to the description information and display the user interface of the application menu.

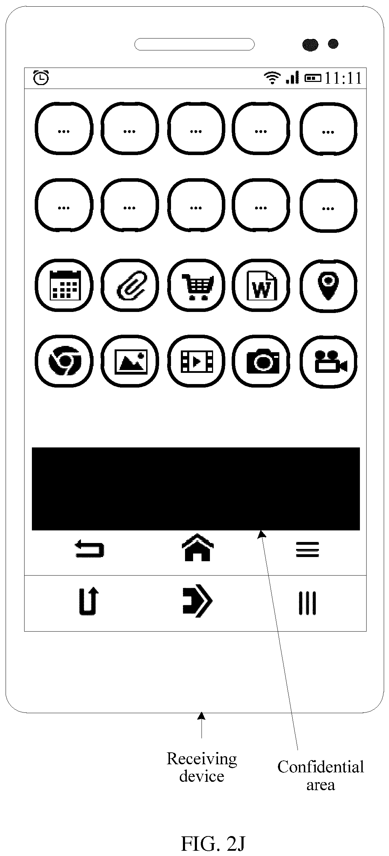

Referring to FIG. 2J, FIG. 2J is a schematic diagram of a screen effect of the receiving device according to the present invention. By means of this embodiment, data displayed in the confidential area of the receiving device may be different from data display in the confidential area of the sharing device. Therefore, an effect of protecting private information from leakage is achieved.

By means of this embodiment, the confidential area in the user interface may be set according to a requirement, and when sending screen data to the receiving device, the sharing device does not send a part corresponding to the confidential area, to prevent an original image in the confidential area from being displayed on the receiving device, so that leakage of private information caused by image display can be effectively avoided.

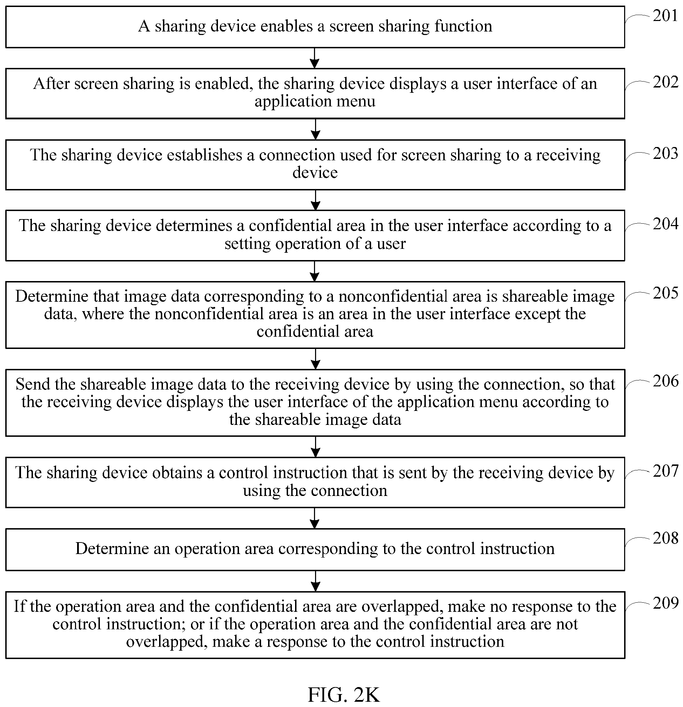

To prevent leakage of private information of the user in the sharing device as the user performs an operation on the sharing device by using the receiving device, as shown in FIG. 2K, after step 207, the method may further include:

Step 207: The sharing device obtains a control instruction that is sent by the receiving device by using the connection.

In a screen sharing process, the sharing device may detect whether the control instruction from the receiving device is received. The control instruction may be generated by the receiving device in response to an operation of the user on the receiving device. The received instruction may include information such as coordinates of a touch location of the user in the receiving device.

Step 208: Determine an operation area corresponding to the control instruction.

After receiving the control instruction sent by the receiving device, the sharing device determines the operation area corresponding to the control instruction according to information included in the control instruction.

For example, the sharing device may first obtain, from the information included in the control instruction, a first coordinate range of a touch when the user performs a touch operation on the receiving device, and then determines, according to the first coordinate range, an area in which an operation according to the control instruction is performed on the user interface, displaying a menu, of the receiving device. When the first coordinate range is a coordinate range in which the user performs an operation on the user interface of the receiving device, because the user interface of the receiving device and the user interface of the sharing device may be different in aspects such as size, proportion, and resolution, the first coordinate range in the user interface of the receiving device further needs to be converted according to a conversion relationship between coordinates in the user interface of the receiving device and coordinates in the user interface of the sharing device into a second coordinate range of performing an operation on the user interface of the sharing device. Next, an operation area corresponding to the control instruction in the user interface, displaying a menu, of the receiving device is determined according to the second coordinate range.

In another embodiment, after receiving the control instruction sent by the receiving device, the sharing device may determine a display object corresponding to the control instruction according to the control instruction.

For example, the sharing device may determine the operation area corresponding to the control instruction according to the information included in the control instruction, and then use, as a display object corresponding to the control instruction, a display object included in the operation area corresponding to the control instruction.

Step 209: If the operation area and the confidential area are overlapped, make no response to the control instruction; or if the operation area and the confidential area are not overlapped, make a response to the control instruction.

Because the confidential area and the operation area are both areas in the display interface of the sharing device, after the operation area is determined, the sharing device may determine whether the operation area and the confidential area are overlapped.

If the operation area and the confidential area are not overlapped, it indicates that the receiving device intends to perform an operation in an area that is in the user interface and in which private information of the user of the sharing device is not leaked, and a response made by the sharing device to the control instruction does not cause leakage of the private information in the sharing device. In this case, the sharing device may make a response to the control instruction. If the operation area and the confidential area are overlapped, it indicates that the receiving device intends to perform an operation in an area that is in the user interface and in which the private information of the user of the sharing device may be leaked, and a response made by the sharing device to the control instruction may cause leakage of the private information in the sharing device. In this case, the sharing device may make no response to the control instruction.

In another embodiment, when the control instruction corresponds to a display object, if the display object corresponding to the control instruction includes the confidential display object, no response is made to the control instruction; or if the display object corresponding to the control instruction does not include the confidential display object, a response is made to the control instruction.

If the display object corresponding to the control instruction does not include the confidential display object, it indicates that the receiving device intends to perform an operation on a display object that does not leak the private information of the user of the sharing device, and a response made by the sharing device to the control instruction does not cause leakage of the private information in the sharing device. In this case, the sharing device may make a response to the control instruction. If the display object corresponding to the control instruction includes the confidential display object, it indicates that the receiving device intends to perform an operation on a display object that may leak the private information of the user of the sharing device, and a response made by the sharing device to the control instruction may cause leakage of the private information in the sharing device. In this case, the sharing device may make no response to the control instruction.

By means of this embodiment, a sharing device may send shareable image data corresponding to a nonconfidential area to only a receiving device; and make a response to only a control instruction that meets a predetermined confidential condition, thereby effectively avoiding leakage of private information of a user in the sharing device when original image data is sent to the receiving device and responses are made to all control instructions, and decreasing security problems in a process of screen sharing.

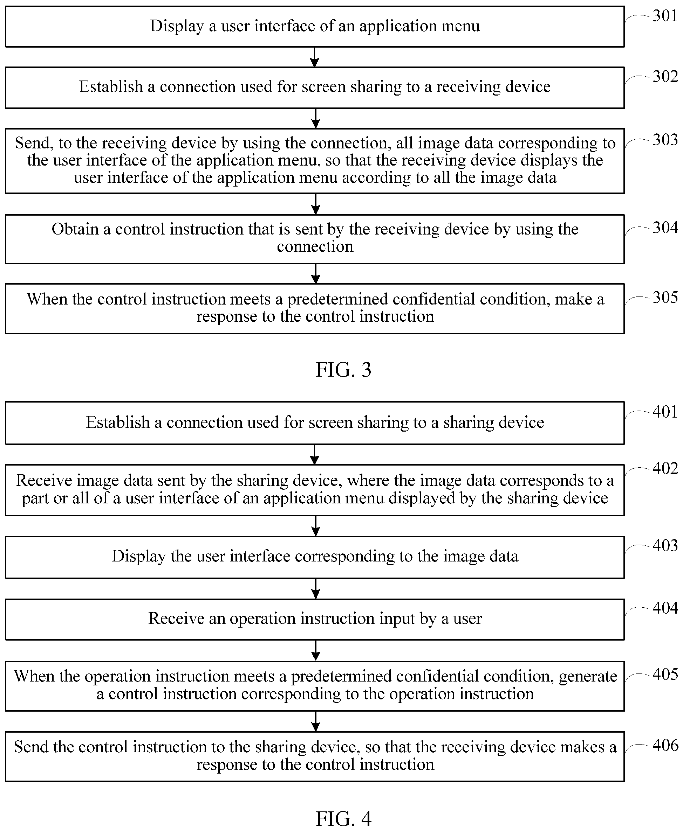

Referring to FIG. 3, FIG. 3 is a flowchart of an embodiment of a control method during screen sharing according to the present invention. This embodiment may be executed by a sharing device.

Step 301: Display a user interface of an application menu.

Step 302: Establish a connection used for screen sharing to a receiving device.

It should be noted herein that, step 301 and step 302 are similar to the steps in the foregoing embodiment, and no detailed description is provided herein. For related parts, refer to the foregoing embodiment. It should be noted herein that an execution order between step 301 and step 302 is not limited in this embodiment.

Step 303: Send, to the receiving device by using the connection, all image data corresponding to the user interface of the application menu, so that the receiving device displays the user interface of the application menu according to all the image data.

After the connection is established, a sending device sends all image data corresponding to the user interface of the application menu to the receiving device, that is, after the connection is established, the sending device sends original image data to the receiving device.

Step 304: Obtain a control instruction that is sent by the receiving device by using the connection.

Step 305: When the control instruction meets a predetermined confidential condition, make a response to the control instruction.

After receiving the control instruction, the receiving device may determine whether the control instruction meets the predetermined confidential condition. When the control instruction meets the predetermined confidential condition, the sharing device makes a response to the control instruction; or when the control instruction does not meet the predetermined confidential condition, the sharing device makes no response to the control instruction.

The predetermined confidential condition may refer to that an operation area corresponding to the control instruction and a confidential area are not overlapped. The receiving device may determine the confidential area in the user interface according to a preset area or a setting operation of a user, and then determine whether the operation area corresponding to the control instruction and the confidential area are overlapped. When the operation area corresponding to the control instruction and the confidential area are not overlapped, a response is made to the control instruction.

The predetermined confidential condition may also refer to that a display object corresponding to the control instruction does not include a confidential display object, where the confidential display object is a part of at least two display objects in the user interface of the application menu of the sharing device.

The receiving device may determine the confidential display object in the user interface according to the preset area or the setting operation of the user, and then determine whether a display object corresponding to the control instruction includes the confidential display object. When the display object corresponding to the control instruction does not include the confidential display object, a response is made to the control instruction.

When the sharing device determines the confidential display object in the user interface, in another embodiment, if the display object corresponding to the control instruction includes the confidential display object, the sharing device makes no response to the control instruction; or if the display object corresponding to the control instruction does not include the confidential display object, the sharing device makes a response to the control instruction.

Because the steps in this embodiment are similar to the steps in the foregoing embodiments, for related parts, refer to the foregoing embodiment, and no detailed description is provided herein.

By means of this embodiment, a sharing device makes a response to a control instruction only when the control instruction meets a predetermined confidential condition, thereby reducing possible leakage of private information of a user in the sharing device because responses are made to all control instructions, and decreasing security problems caused when a response is made to a control instruction.

Referring to FIG. 4, FIG. 4 is a flowchart of another embodiment of a screen sharing method according to the present invention. This embodiment may be executed by a receiving device.

Step 401: Establish a connection used for screen sharing to a sharing device.

For a specific manner of establishing a connection that is between the receiving device and the sharing device and that is used for screen sharing, refer to the foregoing embodiment, and no detailed description is provided herein.

Step 402: Receive image data sent by the sharing device, where the image data corresponds to a part or all of a user interface of an application menu displayed by the sharing device.

The image data received by the receiving device may be original image data, or may be shareable image data. For a specific manner in which the sharing device generates and sends the image data, refer to the foregoing embodiment, and no detailed description is provided herein.

Step 403: Display the user interface corresponding to the image data.

When the image data corresponds to all content of the user interface of the application menu displayed by the sharing device, that is, when the receiving device receives the original image data, the receiving device displays a complete image interface corresponding to the original image data.

When the image data corresponds to a part of the user interface of the application menu displayed by the sharing device, the part of the user interface of the application menu displayed by the sharing device is a shareable interface. Specifically, when the shareable image data is image data corresponding to a nonconfidential area, the receiving device may display the user interface of the application menu according to the shareable image data. For example, when the shareable image data is a picture or a video stream, the receiving device may directly display the picture or the video stream. When the shareable image data is image data corresponding to a nonconfidential display object, the receiving device may construct a user interface according to description information of the nonconfidential display object that is included in the shareable image data and display the user interface.

Step 404: Receive an operation instruction entered by a user.

The receiving device may receive the operation instruction entered by the user.

Step 405: When the operation instruction meets a predetermined confidential condition, generate a control instruction corresponding to the operation instruction.

When the operation instruction meets the predetermined confidential condition, the receiving device generates the control instruction corresponding to the operation instruction. When the operation instruction does not meet the predetermined confidential condition, the receiving device ignores the operation instruction. The ignoring the operation instruction refers to that the control instruction corresponding to the operation instruction is not generated, or although the control instruction corresponding to the operation instruction is generated, the control instruction is not sent to the sharing device.

The confidential condition may be that an operation area corresponding to the operation instruction is inside a nonconfidential area, or may be that an operation object of the operation instruction is a nonconfidential display object. The nonconfidential area is a partial area in the user interface of the application menu displayed by the sharing device. The nonconfidential display object is a part of at least two display objects included in the user interface of the application menu displayed by the sharing device.

In a possible implementation manner, after receiving the operation instruction entered by the user, the receiving device first determines the operation area corresponding to the operation instruction, and then determines whether the operation area is inside the nonconfidential area. When the operation area is inside the nonconfidential area, the receiving device generates the control instruction corresponding to the operation instruction. When the operation area corresponding to the operation instruction is partially or completely outside the shareable user interface, the receiving device ignores the operation instruction.

In a possible implementation manner, after receiving the operation instruction entered by the user, the receiving device determines the operation object of the operation instruction. When the operation object of the operation instruction is a display object in the shareable user interface, the the receiving device generates the control instruction corresponding to the operation instruction. When the operation object of the operation instruction is not a display object in the shareable user interface, the receiving device ignores the operation instruction.

The ignoring the operation instruction refers to that the control instruction corresponding to the operation instruction is not generated, or although the control instruction corresponding to the operation instruction is generated, the control instruction is not sent to the sharing device.

Step 406: Send the control instruction to the sharing device, so that the receiving device makes a response to the control instruction.

After the control control instruction is generated, the receiving device sends the control instruction to a control device, so that the sharing device can make a response to the control instruction.

By means of this embodiment, a receiving device may generate a control instruction only when a predetermined confidential condition is met, so that leakage of private information of a user in the receiving device because of an operation instruction entered by the user can be prevented, thereby decreasing security problems caused to a sharing device because a response is made to the operation instruction entered by the user.

Corresponding to the screen sharing method of the present invention, the present invention further provides a sharing device and a receiving device.

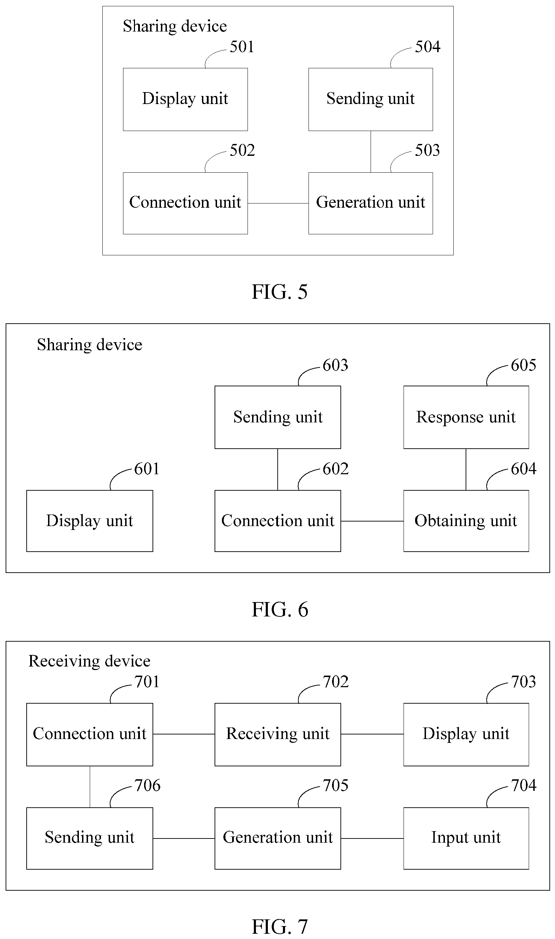

As shown in FIG. 5, FIG. 5 is a schematic diagram of an embodiment of a sharing device according to the present invention. The sharing device includes a display unit 501, a connection unit 502, a generation unit 503, and a sending unit 504.

The display unit 501 is configured to display a user interface of an application menu.

The connection unit 502 is configured to establish a connection used for screen sharing to a receiving device.

The generation unit 503 is configured to determine shareable image data, where the shareable image data is a part of image data corresponding to the user interface.

The sending unit 504 is configured to send the shareable image data to the receiving device by using the connection, so that the receiving device displays the user interface of the application menu according to the shareable image data.

In another embodiment, the device may further include: a determining unit.

In a possible implementation manner,
the determining unit may be configured to determine a confidential area in the user interface according to a preset area or a setting operation of a user, where the confidential area is a partial area in the user interface; and the generation unit 503 may be configured to determine that image data corresponding to a nonconfidential area is the shareable image data, where the nonconfidential area is an area in the user interface except the confidential area.

In another possible implementation manner,
the determining unit may be configured to determine a nonconfidential area in the user interface according to a preset area or a setting operation of a user, where the nonconfidential area is a partial area in the user interface; and the generation unit 503 may be configured to determine that image data corresponding to the nonconfidential area is the shareable image data.

In another possible implementation manner, the user interface includes at least two display objects; and
the determining unit may be configured to determine a confidential display object in the user interface according to a setting operation of a user or a preset display object, where the confidential display object is a part of the at least two display objects; and the generation unit 503, may be configured to determine that image data corresponding to a nonconfidential display object is the shareable image data, where the nonconfidential display object is a display object of the at least two display objects except the confidential display object.

In another possible implementation manner, the user interface includes at least two display objects; and
the determining unit may be configured to determine a nonconfidential display object in the user interface according to a setting operation of a user or a preset display object, where the nonconfidential display object is a part of the at least two display objects; and the generation unit 503 may be configured to determine that image data corresponding to the nonconfidential display object is the shareable image data.

In another embodiment, the generation unit 503 may determine the shareable image data when the following trigger condition is met: receiving a trigger instruction entered by the user, where the trigger instruction is used to trigger execution of the determining shareable image data; or determining that an operation instruction entered by the user is not received within a predetermined time period; or determining that a quantity of receiving devices that have established a connection to the sharing device exceeds a predetermined value.

In another embodiment, the device may further include: a receiving unit.

In another possible implementation manner,
the receiving unit may be configured to receive the setting operation of the user; and the determining unit may be configured to: use, as the confidential area, a rectangular area whose diagonal is a connecting line between an operation start point and an operation end point of the setting operation; or use, as the confidential area, a closed area formed by a trajectory of the setting operation; or use, as the confidential area, an area in which an operation object corresponding to the setting operation is displayed.

In another possible implementation manner,
the receiving unit may be configured to receive the setting operation of the user; and the determining unit may be configured to: use, as the confidential display object, a display object in a rectangular area whose diagonal is a connecting line between an operation start point and an operation end point of the setting operation; or use, as the confidential display object, a display object in a closed area formed by a trajectory of the setting operation; or use, as the confidential display object, a displayed operation object corresponding to the setting operation.

In another embodiment, the device further includes: an obtaining unit, a positioning unit, and a response unit.

In another possible implementation manner,
the obtaining unit may be configured to obtain a control instruction that is sent by the receiving device by using the connection;
the positioning unit may be configured to determine an operation area corresponding to the control instruction; and
the response unit may be configured to: when the operation area and the confidential area are overlapped, make no response to the control instruction; or when the operation area and the confidential area are not overlapped, make a response to the control instruction.

In another possible implementation manner,
the obtaining unit may be configured to obtain a control instruction that is sent by the receiving device by using the connection;
the positioning unit may be configured to determine a display object corresponding to the control instruction; and
the response unit may be configured to: when the display object corresponding to the control instruction includes the confidential display object, make no response to the control instruction; or when the display object corresponding to the control instruction does not include the confidential display object, make a response to the control instruction.

By means of this embodiment, the sharing device may send shareable image data to only a receiving device, thereby effectively avoiding leakage of private information of a user in the sharing device because original image data is sent to the receiving device, and deceasing security problems in a process of screen sharing.

As shown in FIG. 6, FIG. 6 is a schematic diagram of another embodiment of a sharing device according to the present invention. The sharing device includes a display unit 601, a connection unit 602, a sending unit 603, an obtaining unit 604, and a response unit 605.

The display unit 601 is configured to display a user interface of an application menu.

The connection unit 602 is configured to establish a connection used for screen sharing to a receiving device.

The sending unit 603 is configured to send, to the receiving device by using the connection, all image data corresponding to the user interface of the application menu, so that the receiving device displays the user interface of the application menu according to all the image data.

The obtaining unit 604 is configured to obtain a control instruction that is sent by the receiving device by using the connection.

The response unit 605 is configured to: when the control instruction meets a predetermined confidential condition, make a response to the control instruction.

In a possible implementation manner,
the response unit 605 is specifically configured to: when the control instruction meets the following predetermined confidential condition, make a response to the control instruction:
an operation area corresponding to the control instruction and a confidential area that is determined according to a preset area or a setting operation of a user are not overlapped, where the confidential area is a partial area in the user interface; or a display object corresponding to the control instruction does not include a confidential display object, where the confidential display object is a part of at least two display objects in the user interface of the application menu of the sharing device.

By means of this embodiment, the sharing device makes a response to a control instruction only when the control instruction meets a predetermined confidential condition, so that possible leakage of private information of a user in the sharing device because responses are made to all control instructions may be reduced, thereby decreasing security problems in a process of screen sharing.

As shown in FIG. 7, FIG. 7 is a schematic diagram of an embodiment of a receiving device according to the present invention. The receiving device includes a connection unit 701, a receiving unit 702, a display unit 703, an input unit 704, a generation unit 705, and a sending unit 706.

The connection unit 701 is configured to establish a connection used for screen sharing to a sharing device.

The receiving unit 702 is configured to receive, by using the connection, image data sent by the sharing device, where the image data corresponds to a part or all of a user interface of an application menu displayed by the sharing device.

The display unit 703 is configured to display the user interface corresponding to the image data.

The input unit 704 is configured to receive an operation instruction entered by a user.

The generation unit 705 is configured to: when the operation instruction meets a predetermined confidential condition, generate a control instruction corresponding to the operation instruction.

The sending unit 706 is configured to send the control instruction to the sharing device by using the connection, so that the receiving device makes a response to the control instruction.

In a possible implementation manner,
the receiving unit 702 may be configured to receive the image data sent by the sharing device, where the image data corresponds to all of the user interface of the application menu displayed by the sharing device; and
the generation unit 705 is configured to: when the operation instruction meets the predetermined confidential condition, generate the control instruction corresponding to the operation instruction, where the predetermined confidential condition includes: a nonconfidential area is a partial area in the user interface of the application menu displayed by the sharing device; or an operation object of the operation instruction is a nonconfidential display object, where the nonconfidential display object is a part of at least two display objects included in the user interface of the application menu displayed by the sharing device.

In a possible implementation manner,
the receiving unit 702 may be configured to receive the image data sent by the sharing device, where the image data corresponds to a part of the user interface of the application menu displayed by the sharing device, and the part of the user interface of the application menu displayed by the sharing device is a shareable interface; and
the generation unit 705 is configured to: when the operation instruction meets the predetermined confidential condition, generate the control instruction corresponding to the operation instruction, and the predetermined confidential condition includes: an operation area corresponding to the operation instruction is in the shareable interface, or an operation object of the operation instruction is a display object in the shareable interface.

In a possible implementation manner, when the operation instruction meets the predetermined confidential condition, the generation unit 705 may not generate the control instruction corresponding to the operation instruction; or although the generation unit 705 generates the control instruction corresponding to the operation instruction, the sending unit 706 does not send the control instruction to the sharing device.

By means of this embodiment, the receiving device may generate a control instruction only when a predetermined confidential condition is met, so that leakage of private information of a user in the receiving device because of an operation instruction entered by the user can be prevented.

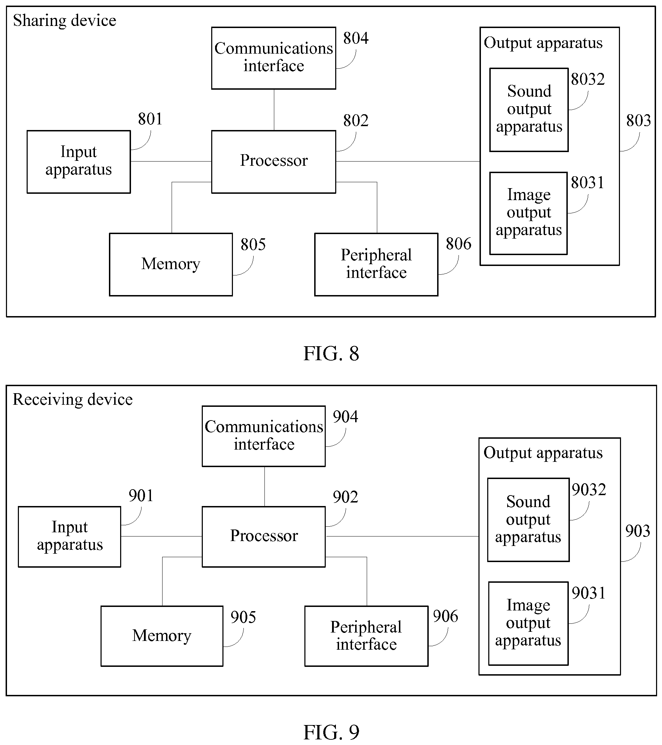

Referring to FIG. 8, FIG. 8 is a schematic diagram of another embodiment of a sharing device according to the present invention. The sharing device is used for screen sharing with a receiving device.

As shown in FIG. 8, the sharing device includes components such as an input apparatus 801, a processor 802, an output apparatus 803, a communications interface 804, a memory 805, and a peripheral interface 806. These components perform communication by using one or more buses. A person skilled in the art may understand that a structure of an electronic device shown in the figure does not constitute any limitation to the present invention. The present invention may be a bus-form structure, or may be a star-shaped structure, and may further include more or fewer components than those shown in the figure, or some components are combined, or a different component deployment may be used. In an implementation manner of the present invention, the sharing device and the receiving device may both be any mobile or portable electronic device, including, but not limited to: mobile telephones, mobile computers, tablet computers, personal digital assistants (Personal Digital Assistant, PDA), media players, smart televisions, and a combination of two or more of the foregoing items.

The input apparatus 801 is configured to implement interaction between a user and an electronic device and/or input of information to an electronic device. For example, the input apparatus 801 may receive digit or character information entered by the user, to generate a signal input related to a setting of the user or function control. In a specific implementation manner of the present invention, the input apparatus 801 may be a touch panel, or may be another human-computer interaction interface such as a physical input key or a microphone, or may be another external information capturing apparatus such as a camera. The touch panel, which is also referred to as a touchscreen or a touch screen, can collect a touch operation action performed by the user on the touch panel or an operation action performed by the user near the touch panel, for example, an operation action performed by the user on the touch panel or at a position near the touch panel by using any suitable object or accessory such as a finger or a stylus, and drive a corresponding connection apparatus according to a preset program. Optionally, the touch panel may include two parts: a touch detection apparatus and a touch controller. The touch detection apparatus detects a touch operation of the user, converts the detected touch operation into an electrical signal, and transmits the electrical signal to the touch controller. The touch controller receives the electrical signal from the touch detection apparatus, converts the electrical signal into coordinates of a touch point, and then sends the coordinates to a processing unit. The touch controller may further receive a command sent by the processing unit and execute the command. In addition, the touch panel may be a resistive, capacitive, infrared (Infrared), or surface acoustic wave touch panel. In another implementation manner of the present invention, the physical input key used by the input apparatus 801 may include, but is not limited to, one or more of a physical keyboard, a functional key (such as a volume control key or a switch key), a trackball, a mouse, or a joystick. The input apparatus 801 in a microphone form may collect speech entered by the user or from an environment and convert the speech into a command that is in an electrical signal form and that can be executed by the processing unit.

In some other implementation manners of the present invention, the input apparatus 801 may further be various types of sensors, for example, a Hall device, configured to detect physical quantities of the electronic device, such as a force, a torque, a pressure, a stress, a location, a displacement, a speed, an acceleration, an angle, an angular velocity, revolutions, a rotating speed, and a time when a working state changes, and converts the physical quantities into electric quantities for detection and control. Some other sensors may include a gravity sensor, a tri-axis accelerometer, a gyroscope, and the like.

The processor 802 is a control center of the electronic device, connects parts of the entire electronic device by using various interfaces and lines, and runs or executes a software program and/or module stored in the memory 805 and invokes data stored in the memory 805 to perform various functions of the electronic device and/or process data. The processor 802 may include an integrated circuit (Integrated Circuit, IC for short), for example, may include a single packaged IC, or may include multiple successive packaged ICs that have a same function or different functions. For example, the processor 802 may include only a central processing unit (Central Processing Unit, CPU for short), or may be a combination of a GPU, a digital signal processor (Digital Signal Processor, DSP for short), and a control chip (for example, a baseband chip) that is in the communications interface 804. In an implementation manner of the present invention, the CPU may be a single computing core or may include multiple computing cores.

The communications interface 804 is configured to establish a communication channel, so that the sharing device is connected to the receiving device by using the communication channel. The communications interface 804 may include a communications module such as a wireless local area network (Wireless Local Area Network, wireless LAN for short) module, a Bluetooth module, or a baseband (Base Band) module, and a radio frequency (Radio Frequency, RF for short) circuit corresponding to the communications module, where the radio frequency circuit is configured to perform wireless local area network communication, Bluetooth communication, infrared communication, and/or cellular communications system communication, for example, Wideband Code Division Multiple Access (Wideband Code Division Multiple Access, W-CDMA for short) and/or High Speed Downlink Packet Access (High Speed Downlink Packet Access, HSDPA for short). The communications module is configured to control communication between components in the electronic device, and may support direct memory access (Direct Memory Access).

In different implementation manners of the present invention, various communications modules in the communications interface 804 generally appear in a form of integrated circuit chips (Integrated Circuit Chip), and may be combined selectively, but the communications interface 804 does not need to include all the communications modules and corresponding antenna groups. For example, the communications interface 804 may include only a baseband chip, a radio frequency chip, and a corresponding antenna to provide a communication function in a cellular communications system. The electronic device may be connected to a cellular network (Cellular Network) or the Internet (Internet) by means of a wireless communication connection, for example, wireless local area network access or WCDMA access, established by the communications interface 804. In some optional implementation manners of the present invention, the communications module, for example, a baseband module in the communications interface 804 may be integrated into the processor 802; an APQ+MDM series platform provided by the Qualcomm (Qualcomm) company is a typical example.

The radio frequency circuit is configured to receive and send a signal during an information receiving and sending process or during a call. For example, a transmission stream of shared screen data processed by the sharing device is transferred to the receiving device, and a touch instruction returned by the receiving device is received. Generally, the radio frequency circuit includes a commonly known circuit configured to perform these functions, and includes, but is not limited to, an antenna system, a radio frequency transceiver, one or more amplifiers, a tuner, one or more oscillators, a digital signal processor, a codec (Codec) chipset, a subscriber identity module (SIM) card, and a memory. In addition, the radio frequency circuit may further communicate with a network and another device by means of wireless communication. The wireless communication may use any communications standard or protocol, which includes, but is not limited to, a GSM (Global System of Mobile communication, Global System for Mobile Communications), a GPRS (General Packet Radio Service, general packet radio service), CDMA (Code Division Multiple Access, Code Division Multiple Access), WCDMA (Wideband Code Division Multiple Access, Wideband Code Division Multiple Access), a High Speed Uplink Packet Access technology (High Speed Uplink Packet Access, HSUPA), LTE (Long Term Evolution, Long Term Evolution), email, SMS (Short Messaging Service, short messaging service), and the like.

The output apparatus 803 includes, but is not limited to, an image output apparatus 8031 and a sound output apparatus 8032. The image output apparatus 803 is configured to output text, a picture, and/or a video. The image output apparatus 8031 may include a display panel, for example, a display panel that is configured by using a form such as an LCD (Liquid Crystal Display, liquid crystal display), an OLED (Organic Light-Emitting Diode, organic light-emitting diode), or a field emission display (field emission display, FED for short). Alternatively, the image output apparatus 8031 may include a reflective display, such as an electrophoretic (electrophoretic) display, or a display using a technology of interferometric modulation of light (Interferometric Modulation of Light). The image output apparatus 8031 may include a single display or multiple displays of different sizes. In a specific implementation manner of the present invention, the touch panel used by the foregoing input apparatus 801 may also be used as a display panel of the output apparatus 8031 at the same time. For example, the touch panel displays a current display picture, and may at the same time receive an instruction of a user used to specify a confidential area. Although in the structural diagram, the input apparatus 801 and the output apparatus 803 are used as two independent components to implement input and output functions of the electronic device, in some embodiments, the touch panel and the display panel may be integrated to implement the input and output functions of the electronic device. For example, the image output apparatus 803 may display various graphical user interfaces (Graphical User Interface, GUI for short) to serve as virtual control components, which include but are not limited to a window, a scroll, an icon, and a scrapbook, so that a user performs an operation in a touch manner.

In a specific implementation manner of the present invention, the image output apparatus 8031 includes a filter and an amplifier, which are configured to perform filtering and amplification on a video output by the processing unit. The audio output apparatus 8032 includes a digital-to-analog converter, configured to convert, from a digital format into an analog format, an audio signal output by the processing unit.

The memory 805 may be configured to store a software program and a module. The processing unit runs the software program and the module that are stored in the memory 805, to implement various functional applications of the electronic device and implement data processing. The memory 805 mainly includes a program storage area and a data storage area. The program storage area may store an operating system, and an application program required by at least one function, such as a sound playback program or an image display program. The data storage area may store data (such as audio data or an address book) created according to use of the electronic device, and the like. In a specific implementation manner of the present invention, the memory 805 may include a volatile memory, such as a nonvolatile dynamic random access memory (Nonvolatile Random Access Memory, NVRAM for short), a phase change random access memory (Phase Change RAM, PRAM for short), or a magnetoresistive random access memory (Magetoresistive RAM, MRAM for short), or may include a nonvolatile memory, such as at least one magnetic storage device, an electrically erasable programmable read-only memory (Electrically Erasable Programmable Read-Only Memory, EEPROM for short), or a flash memory device, for example, a NOR flash memory (NOR flash memory) or a NAND flash memory (NAND flash memory). The nonvolatile memory stores the operating system and the application program that are executed by the processing unit. The processing unit loads a running program and data from the nonvolatile memory into memory and stores digital data in a mass storage apparatus. The operating system includes various components and/or drivers that are configured to control and manage routine system tasks, such as memory management, storage device control, and power management, and to facilitate communication between various types of software and hardware. In an implementation manner of the present invention, the operating system may be an Android system from the Google company, an iOS system developed by the Apple company, or a Windows operating system developed by the Microsoft company, or an embedded operating system such as Vxworks.

The application program includes any application installed in the electronic device, and includes, but is not limited to, an application such as a browser, email, an instant messaging service, text processing, a virtual keyboard, a widget (Widget), encryption, digital copyright management, speech recognition, speech duplication, positioning (for example, a function provided by a global positioning system), or music playback.

The power supply is configured to supply power to different components of the electronic device to maintain operation of the electronic device. It is generally understood that the power supply may be a built-in battery such as a common lithium ion battery or a common nickel-hydrogen battery, or includes an external power supply, such as an AC adapter, that directly supplies power to the electronic device. In some implementation manners of the present invention, the power supply may further have wider definitions, for example, may further include a power supply management system, a charging system, a power supply failure detection circuit, a power supply converter or inverter, a power supply status indicator (for example, a light-emitting diode), and any other component that is related to generation, management, and distribution of electrical energy of the electronic device.

In a possible implementation manner,
the image output apparatus 8031 may be configured to display a user interface of an application menu; the communications interface 804 may be configured to establish a connection used for screen sharing to the receiving device; the processor 802 may be configured to determine shareable image data, where the shareable image data is a part of image data corresponding to the user interface; and the communications interface 804 may be further configured to send the shareable image data to the receiving device by using the connection, so that the receiving device displays the user interface of the application menu according to the shareable image data.

In another possible implementation manner,
the processor 802 is further configured to: before the shareable image data is determined, determine a confidential area in the user interface according to a preset area or a setting operation of a user, where the confidential area is a partial area in the user interface; and the process of determining shareable image data includes: determining that image data corresponding to a nonconfidential area is the shareable image data, where the nonconfidential area is an area in the user interface except the confidential area.

In another possible implementation manner,
the processor 802 is further configured to: before the shareable image data is determined, determine a nonconfidential area in the user interface according to a preset area or a setting operation of a user, where the nonconfidential area is a partial area in the user interface; and the process of determining shareable image data includes: determining that image data corresponding to the nonconfidential area is the shareable image data.

In another possible implementation manner,
the processor 802 is further configured to: before the shareable image data is determined, determine a confidential display object in the user interface according to a setting operation of a user or a preset display object, where the confidential display object is a part of at least two display objects; and the process of determining shareable image data includes: determining that image data corresponding to a nonconfidential display object is the shareable image data, where the nonconfidential display object is a display object of the at least two display objects except the confidential display object.

In another possible implementation manner,
the processor 802 is further configured to: before the shareable image data is determined, determine a nonconfidential display object in the user interface according to a setting operation of a user or a preset display object, where the nonconfidential display object is a part of at least two display objects; and the process of determining shareable image data includes: determining that image data corresponding to the nonconfidential display object is the shareable image data.

In another possible implementation manner,
a predetermined trigger condition includes: receiving a trigger instruction entered by the user, where the trigger instruction is used to trigger execution of the determining shareable image data; or determining that an operation instruction entered by the user is not received within a predetermined time period; or determining that a quantity of receiving devices that have established a connection to the sharing device exceeds a predetermined value.

In another possible implementation manner,
the input apparatus 801 is configured to receive the setting operation of the user; and the processor 802 is specifically configured to: use, as the confidential display object, a display object in a rectangular area whose diagonal is a connecting line between an operation start point and an operation end point of the setting operation; or use, as the confidential display object, a display object in a closed area formed by a trajectory of the setting operation; or use, as the confidential display object, a displayed operation object corresponding to the setting operation.

In another possible implementation manner,
the input apparatus 801 is configured to receive the setting operation of the user; and the processor 802 is specifically configured to: use, as the confidential area, a rectangular area whose diagonal is a connecting line between an operation start point and an operation end point of the setting operation; or use, as the confidential area, a closed area formed by a trajectory of the setting operation; or use, as the confidential area, an area in which an operation object corresponding to the setting operation is displayed.

In another possible implementation manner,
the communications interface 804 is further configured to obtain a control instruction that is sent by the receiving device by using the connection; and the processor 802 is further configured to: when an operation area and the confidential area are overlapped, make no response to the control instruction; or when the operation area and the confidential area are not overlapped, make a response to the control instruction.

In another possible implementation manner,
the communications interface 804 is further configured to obtain a control instruction that is sent by the receiving device by using the connection; and the processor 802 is further configured to: when a display object corresponding to the control instruction includes the confidential display object, make no response to the control instruction; or when a display object corresponding to the control instruction does not include the confidential display object, make a response to the control instruction.

In another embodiment,
the image output apparatus 8031 may be further configured to display the user interface of the application menu; the communications interface 804 may be further configured to: establish a connection used for screen sharing to the receiving device; send, to the receiving device by using the connection, all image data corresponding to the user interface of the application menu, so that the receiving device displays the user interface of the application menu according to all the image data; and obtain the control instruction that is sent by the receiving device by using the connection; and the processor 802 may be further configured to: when the control instruction meets a predetermined confidential condition, make a response to the control instruction.

The predetermined confidential condition includes: the operation area corresponding to the control instruction and the confidential area that is determined according to the preset area or the setting operation of the user are not overlapped; or a display object corresponding to the control instruction does not include the confidential display object, where the confidential area is a partial area in the user interface, and the confidential display object is a part of at least two display objects in the user interface of an application menu of the sharing device.

By means of this embodiment, the sharing device may send shareable image data to only a receiving device, thereby providing varied manners of sharing of a user interface of an application menu.

Referring to FIG. 9, FIG. 9 is a schematic diagram of another embodiment of a receiving device according to the present invention. The receiving device is used for control of a sharing device in a screen sharing process.

As shown in FIG. 9, the sharing device includes components such as an input apparatus 901, a processor 902, an output apparatus 903, a communications interface 904, a memory 905, and a peripheral interface 906. The output apparatus 903 may include an image output apparatus 9031 and an audio output apparatus 9032. For functions of the apparatuses and connection relationships between the apparatuses, refer to the foregoing embodiment, and details are not described herein.

In a possible implementation manner, the communications interface 904 may be configured to: establish a connection used for screen sharing to the sharing device, and receive image data sent by the sharing device, where the image data corresponds to a part or all of a user interface of an application menu displayed by the sharing device; the image output apparatus 9031 may be configured to display the user interface corresponding to the image data; the input apparatus 901 may be configured to receive an operation instruction entered by a user; the processor 902 may be configured to: when the operation instruction meets a predetermined confidential condition, generate a control instruction corresponding to the operation instruction; and the communications interface 904 may be further configured to send the control instruction to the sharing device, so that the receiving device makes a response to the control instruction.

The predetermined confidential condition may include: an operation area corresponding to the operation instruction is inside a nonconfidential area, where the nonconfidential area is a partial area in the user interface of the application menu displayed by the sharing device; or an operation object of the operation instruction is a nonconfidential display object, where the nonconfidential display object is a part of at least two display objects included in the user interface of the application menu displayed by the sharing device. Alternatively, the predetermined confidential condition may include: an operation area corresponding to the operation instruction is in a shareable interface, or an operation object of the operation instruction is a display object in a shareable interface.

By means of this embodiment, the receiving device may generate a control instruction only when a predetermined confidential condition is met, so that possible leakage of private information of a user on the receiving device because of responding to all operation instructions entered by the user may be reduced.

In specific implementation, an embodiment of the present invention further provides a computer storage medium, where the computer storage medium may store a program, and, when the program is executed, a part or all of the steps of the embodiments of the calling method provided in the present invention may be performed. The storage medium may include: a magnetic disk, an optical disc, a read-only memory (Read-Only Memory, ROM), or a random access memory (Random Access Memory, RAM).

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, apparatus and system embodiments are basically similar to a method embodiment, and therefore are described briefly; for related parts, reference may be made to partial descriptions in the method embodiment.

The foregoing descriptions are implementation manners of the present invention, but are not intended to limit the protection scope of the present invention. Any modification, equivalent replacement, and improvement may be made, as long as the modification, equivalent replacement and improvement falls within the scope of the invention, which is only defined by the appended claims.

## Claims

1. A screen sharing method, performed by a sharing device and used for sharing a screen between a sharing device and a receiving device, wherein the method comprises:
Displaying (101) a user interface of an application menu;
establishing (102, 203) a connection used for screen sharing to the receiving device;
determining (103) shareable image data, wherein the shareable image data is a part of image data corresponding to the user interface; and
sending (104, 206) the shareable image data to the receiving device by using the connection, so that the receiving device displays the user interface of the application menu according to the shareable image data;
the method **characterised by**:
wherein before the determining shareable image data, the method further comprises
determining that a quantity of receiving devices that have established a connection to the sharing device exceeds a predetermined value, and determining the shareable image data if the quantity of receiving devices that have established a connection to the sharing device exceeds the predetermined value; and
wherein after the sending the shareable image data to the receiving device, the method further comprises:
obtaining (207) a control instruction that is sent by the receiving device by using the connection; and
when the control instruction meets a predetermined confidential condition, making a response to the control instruction.

2. The method according to claim 1, wherein before the determining (103) shareable image data, the method further comprises:
determining (204) a confidential area in the user interface according to a preset area or a setting operation of a user, wherein the confidential area is a partial area in the user interface; and
the determining shareable image data comprises:
determining (205) that image data corresponding to a nonconfidential area is the shareable image data, wherein the nonconfidential area is an area in the user interface except the confidential area.

3. The method according to claim 1, wherein before the determining shareable image data, the method further comprises:
determining a nonconfidential area in the user interface according to a preset area or a setting operation of a user, wherein the nonconfidential area is a partial area in the user interface; and
the determining shareable image data comprises:
determining that image data corresponding to the nonconfidential area is the shareable image data.

4. The method according to claim 1, wherein the user interface comprises at least two display objects; before the determining shareable image data, the method further comprises:
determining a confidential display object in the user interface according to a setting operation of a user or a preset display object, wherein the confidential display object is a part of the at least two display objects; and
the determining shareable image data comprises:
determining that image data corresponding to a nonconfidential display object is the shareable image data, wherein the nonconfidential display object is a display object of the at least two display objects except the confidential display object.

5. The method according to claim 1, wherein the user interface comprises at least two display objects; before the determining shareable image data, the method further comprises:
determining a nonconfidential display object in the user interface according to a setting operation of a user or a preset display object, wherein the nonconfidential display object is a part of the at least two display objects; and
the determining shareable image data comprises:
determining that image data corresponding to the nonconfidential display object is the shareable image data.

6. The method according to claim 2, wherein after the sending the shareable image data to the receiving device, the method further comprises:
obtaining a control instruction that is sent by the receiving device by using the connection;
determining an operation area corresponding to the control instruction; and
if the operation area and the confidential area are overlapped, making no response to the control instruction; or
if the operation area and the confidential area are not overlapped, making a response to the control instruction

7. The method according to claim 4, wherein after the sending the shareable image data to the receiving device, the method further comprises:
obtaining a control instruction that is sent by the receiving device by using the connection;
determining a display object corresponding to the control instruction; and
if the display object corresponding to the control instruction comprises the confidential display object, making no response to the control instruction; or
if the display object corresponding to the control instruction does not comprise the confidential display object, making a response to the control instruction.

8. The method, according to one of the claims 1 to 7, wherein the shareable image is all of the image data corresponding to the user interface.

9. A sharing device, used for screen sharing with a receiving device, wherein the sharing device comprises:
a display unit (501), configured to display a user interface of an application menu;
a connection unit (502), configured to establish a connection used for screen sharing to the receiving device;
a generation unit (503), configured to determine shareable image data, wherein the shareable image data is a part of image data corresponding to the user interface; and
a sending unit (504), configured to send the shareable image data to the receiving device by using the connection, so that the receiving device displays the user interface of the application menu according to the shareable image data;
the sharing device **characterised by**:
wherein
the generation unit (503) is specifically configured to: when a predetermined trigger condition is met, determine the shareable image data, wherein the predetermined trigger condition comprises:
determining that a quantity of receiving devices that have established a connection to the sharing device exceeds a predetermined value;
wherein the device further comprises:
an obtaining unit, configured to obtain a control instruction that is sent by the receiving device by using the connection, after the sending unit sends the shareable image data to the receiving device; and
a response unit, configured to: when the control instruction meets a predetermined confidential condition, make a response to the control instruction.

## Patentansprüche

1. Verfahren zur gemeinsamen Bildschirmnutzung, durchgeführt durch eine Vorrichtung zur gemeinsamen Nutzung und verwendet zur gemeinsamen Nutzung eines Bildschirms zwischen einer Vorrichtung zur gemeinsamen Nutzung und einer Empfangsvorrichtung, wobei das Verfahren umfasst:
Anzeigen (101) einer Benutzeroberfläche eines Anwendungsmenüs;
Herstellen (102, 203) einer zur gemeinsamen Bildschirmnutzung verwendeten Verbindung zur Empfangsvorrichtung;
Bestimmen (103) gemeinsam nutzbarer Bilddaten, wobei die gemeinsam nutzbaren Bilddaten ein Teil von Bilddaten entsprechend der Benutzeroberfläche sind; und
Senden (104, 206) der gemeinsam nutzbaren Bilddaten an die Empfangsvorrichtung durch Verwenden der Verbindung, sodass die Empfangsvorrichtung die Benutzeroberfläche des Anwendungsmenüs gemäß den gemeinsam nutzbaren Bilddaten anzeigt;
das Verfahren **gekennzeichnet durch**:
wobei, vor dem Bestimmen gemeinsam nutzbarer Bilddaten, das Verfahren ferner umfasst
Bestimmen, dass eine Menge von Empfangsvorrichtungen, die eine Verbindung zur Vorrichtung zur gemeinsamen Nutzung hergestellt haben, einen vorbestimmten Wert überschreitet, und Bestimmen der gemeinsam nutzbaren Bilddaten, wenn die Menge von Empfangsvorrichtungen, die eine Verbindung zur Vorrichtung zur gemeinsamen Nutzung hergestellt haben, den vorbestimmten Wert überschreitet; und
wobei, nach dem Senden der gemeinsam nutzbaren Bilddaten an die Empfangsvorrichtung, das Verfahren ferner umfasst:
Erhalten (207) eines Steuerbefehls, der durch die Empfangsvorrichtung gesendet wird, durch Verwenden der Verbindung und
wenn der Steuerbefehl eine vorbestimmte vertrauliche Bedingung erfüllt, Vornehmen einer Reaktion auf den Steuerbefehl.

2. Verfahren nach Anspruch 1, wobei, vor dem Bestimmen (103) gemeinsam nutzbarer Bilddaten, das Verfahren ferner umfasst:
Bestimmen (204) eines vertraulichen Bereichs in der Benutzeroberfläche gemäß einem vorgegebenen Bereich oder einem Festlegungsvorgang eines Benutzers, wobei der vertrauliche Bereich ein Teilbereich in der Benutzeroberfläche ist; und
wobei das Bestimmen gemeinsam nutzbarer Bilddaten umfasst:
Bestimmen (205), dass Bilddaten entsprechend einem nichtvertraulichen Bereich die gemeinsam nutzbaren Bilddaten sind, wobei der nichtvertrauliche Bereich ein Bereich in der Benutzeroberfläche außer dem vertraulichen Bereich ist.

3. Verfahren nach Anspruch 1, wobei, vor dem Bestimmen gemeinsam nutzbarer Bilddaten, das Verfahren ferner umfasst:
Bestimmen eines nichtvertraulichen Bereichs in der Benutzeroberfläche gemäß einem vorgegebenen Bereich oder einem Festlegungsvorgang eines Benutzers, wobei der nichtvertrauliche Bereich ein Teilbereich in der Benutzeroberfläche ist; und
wobei das Bestimmen gemeinsam nutzbarer Bilddaten umfasst:
Bestimmen, dass Bilddaten entsprechend dem nichtvertraulichen Bereich die gemeinsam nutzbaren Bilddaten sind.

4. Verfahren nach Anspruch 1, wobei die Benutzeroberfläche zumindest zwei Anzeigeobjekte umfasst;
wobei, vor dem Bestimmen gemeinsam nutzbarer Bilddaten, das Verfahren ferner umfasst:
Bestimmen eines vertraulichen Anzeigeobjekts in der Benutzeroberfläche gemäß einem Festlegungsvorgang eines Benutzers oder einem vorgegebenen Anzeigeobjekt, wobei das vertrauliche Anzeigeobjekt ein Teil der zumindest zwei Anzeigeobjekte ist; und
wobei das Bestimmen gemeinsam nutzbarer Bilddaten umfasst:
Bestimmen, dass Bilddaten entsprechend einem nichtvertraulichen Anzeigeobjekt die gemeinsam nutzbaren Bilddaten sind, wobei das nichtvertrauliche Anzeigeobjekt ein Anzeigeobjekt der zumindest zwei Anzeigeobjekte außer dem vertraulichen Anzeigeobjekt ist.

5. Verfahren nach Anspruch 1, wobei die Benutzeroberfläche zumindest zwei Anzeigeobjekte umfasst;
wobei, vor dem Bestimmen gemeinsam nutzbarer Bilddaten, das Verfahren ferner umfasst:
Bestimmen eines nichtvertraulichen Anzeigeobjekts in der Benutzeroberfläche gemäß einem Festlegungsvorgang eines Benutzers oder einem vorgegebenen Anzeigeobjekt, wobei das nichtvertrauliche Anzeigeobjekt ein Teil der zumindest zwei Anzeigeobjekte ist; und
wobei das Bestimmen gemeinsam nutzbarer Bilddaten umfasst:
Bestimmen, dass Bilddaten entsprechend dem nichtvertraulichen Anzeigeobjekt die gemeinsam nutzbaren Bilddaten sind.

6. Verfahren nach Anspruch 2, wobei, nach dem Senden der gemeinsam nutzbaren Bilddaten an die Empfangsvorrichtung, das Verfahren ferner umfasst:
Erhalten eines Steuerbefehls, der durch die Empfangsvorrichtung gesendet wird, durch Verwenden der Verbindung;
Bestimmen eines Vorgangsbereichs entsprechend dem Steuerbefehl und
wenn der Vorgangsbereich und der vertrauliche Bereich überlappt sind, Vornehmen keiner Reaktion auf den Steuerbefehl oder
wenn der Vorgangsbereich und der vertrauliche Bereich nicht überlappt sind, Vornehmen einer Reaktion auf den Steuerbefehl.

7. Verfahren nach Anspruch 4, wobei, nach dem Senden der gemeinsam nutzbaren Bilddaten an die Empfangsvorrichtung, das Verfahren ferner umfasst:
Erhalten eines Steuerbefehls, der durch die Empfangsvorrichtung gesendet wird, durch Verwenden der Verbindung;
Bestimmen eines Anzeigeobjekts entsprechend dem Steuerbefehl und
wenn das Anzeigeobjekt entsprechend dem Steuerbefehl das vertrauliche Anzeigeobjekt umfasst, Vornehmen keiner Reaktion auf den Steuerbefehl oder
wenn das Anzeigeobjekt entsprechend dem Steuerbefehl das vertrauliche Anzeigeobjekt nicht umfasst, Vornehmen einer Reaktion auf den Steuerbefehl.

8. Verfahren nach einem der Ansprüche 1 bis 7, wobei das gemeinsam nutzbare Bild alle der Bilddaten entsprechend der Benutzeroberfläche ist.

9. Vorrichtung zur gemeinsamen Nutzung, das zur gemeinsamen Bildschirmnutzung mit einer Empfangsvorrichtung verwendet wird, wobei die Vorrichtung zur gemeinsamen Nutzung umfasst:
eine Anzeigeeinheit (501), die zur Anzeige einer Benutzeroberfläche eines Anwendungsmenüs ausgelegt ist;
eine Verbindungseinheit (502), die zum Herstellen einer zur gemeinsamen Bildschirmnutzung verwendeten Verbindung zur Empfangsvorrichtung ausgelegt ist;
eine Erzeugungseinheit (503), die zum Bestimmen gemeinsam nutzbarer Bilddaten ausgelegt ist, wobei die gemeinsam nutzbaren Bilddaten ein Teil von Bilddaten entsprechend der Benutzeroberfläche sind; und
eine Sendeeinheit (504), die zum Senden der gemeinsam nutzbaren Bilddaten an die Empfangsvorrichtung durch Verwenden der Verbindung ausgelegt ist, sodass die Empfangsvorrichtung die Benutzeroberfläche des Anwendungsmenüs gemäß den gemeinsam nutzbaren Bilddaten anzeigt;
die Vorrichtung zur gemeinsamen Nutzung **gekennzeichnet durch**:
wobei
die Erzeugungseinheit (503) insbesondere ausgelegt ist zum: wenn eine vorbestimmte Auslösebedingung erfüllt ist, Bestimmen der gemeinsam nutzbaren Bilddaten, wobei die vorbestimmte Auslösebedingung umfasst:
Bestimmen, dass eine Menge von Empfangsvorrichtungen, die eine Verbindung zur Vorrichtung zur gemeinsamen Nutzung hergestellt haben, einen vorbestimmten Wert überschreitet;
wobei die Vorrichtung ferner umfasst:
eine Erhaltungseinheit, die zum Erhalten eines Steuerbefehls, der durch die Empfangsvorrichtung gesendet wird, durch Verwenden der Verbindung, nachdem die Sendeeinheit die gemeinsam nutzbaren Bilddaten an die Empfangsvorrichtung sendet, ausgelegt ist; und
eine Reaktionseinheit, ausgelegt zum: wenn der Steuerbefehl eine vorbestimmte vertrauliche Bedingung erfüllt, Vornehmen einer Reaktion auf den Steuerbefehl.

## Revendications

1. Procédé de partage d'écran, réalisé par un dispositif de partage et utilisé pour partager un écran entre un dispositif de partage et un dispositif de réception, le procédé comprenant les étapes consistant à :
afficher (101) une interface d'utilisateur d'un menu d'application ;
établir (102, 203), avec le dispositif de réception, une connexion utilisée pour le partage d'écran ;
déterminer (103) des données d'image partageable, les données d'image partageable étant une partie de données d'image qui correspondent à l'interface d'utilisateur ; et
envoyer (104, 206) les données d'image partageable au dispositif de réception au moyen de la connexion, de sorte que le dispositif de réception affiche l'interface d'utilisateur du menu d'application selon les données d'image partageable ;
le procédé étant **caractérisé en ce que** :
le procédé comprenant en outre, avant la détermination de données d'image partageable, les étapes consistant à :
déterminer qu'un nombre de dispositifs de réception qui ont établi une connexion avec le dispositif de partage dépasse une valeur prédéterminée et déterminer les données d'image partageable si le nombre de dispositifs de réception qui ont établi une connexion avec le dispositif de partage dépasse la valeur prédéterminée ; et
le procédé comprenant en outre, après l'envoi des données d'image partageable au dispositif de réception, les étapes consistant à :
obtenir (207) une instruction de contrôle qui est envoyée par le dispositif de réception au moyen de la connexion ; et
quand l'instruction de contrôle satisfait à une condition confidentielle prédéterminée, générer une réponse à l'instruction de contrôle.

2. Procédé selon la revendication 1, le procédé comprenant en outre, avant la détermination (103) de données d'image partageable, l'étape consistant à :
déterminer (204) une zone confidentielle dans l'interface d'utilisateur selon une zone prédéfinie ou une opération de réglage d'un utilisateur, la zone confidentielle étant une zone partielle dans l'interface d'utilisateur ; et
la détermination de données d'image partageable comprenant l'étape consistant à :
déterminer (205) que des données d'image qui correspondent à une zone non confidentielle sont les données d'image partageable, la zone non confidentielle étant une zone dans l'interface d'utilisateur qui excepte la zone confidentielle.

3. Procédé selon la revendication 1, le procédé comprenant en outre, avant la détermination de données d'image partageable, l'étape consistant à :
déterminer une zone non confidentielle dans l'interface d'utilisateur selon une zone prédéfinie ou une opération de réglage d'un utilisateur, la zone non confidentielle étant une zone partielle dans l'interface d'utilisateur ; et
la détermination de données d'image partageable comprenant l'étape consistant à :
déterminer que des données d'image qui correspondent à la zone non confidentielle sont les données d'image partageable.

4. Procédé selon la revendication 1, l'interface d'utilisateur comprenant au moins deux objets d'affichage ; le procédé comprenant en outre, avant la détermination de données d'image partageable, l'étape consistant à :
déterminer un objet d'affichage confidentiel dans l'interface d'utilisateur selon une opération de réglage d'un utilisateur ou un objet d'affichage prédéfini, l'objet d'affichage confidentiel étant une partie des au moins deux objets d'affichage ; et
la détermination de données d'image partageable comprenant l'étape consistant à :
déterminer que des données d'image qui correspondent à un objet d'affichage non confidentiel sont les données d'image partageable, l'objet d'affichage non confidentiel étant un objet d'affichage des au moins deux objets d'affichage qui excepte l'objet d'affichage confidentiel.

5. Procédé selon la revendication 1, l'interface d'utilisateur comprenant au moins deux objets d'affichage ;
le procédé comprenant en outre, avant la détermination de données d'image partageable, l'étape consistant à :
déterminer un objet d'affichage non confidentiel dans l'interface d'utilisateur selon une opération de réglage d'un utilisateur ou un objet d'affichage prédéfini, l'objet d'affichage non confidentiel étant une partie des au moins deux objets d'affichage ; et
la détermination de données d'image partageable comprenant l'étape consistant à :
déterminer que des données d'image qui correspondent à l'objet d'affichage non confidentiel sont les données d'image partageable.

6. Procédé selon la revendication 2, le procédé comprenant en outre, après l'envoi des données d'image partageable au dispositif de réception, les étapes consistant à :
obtenir une instruction de contrôle qui est envoyée par le dispositif de réception au moyen de la connexion ;
déterminer une zone d'opération qui correspond à l'instruction de contrôle ; et
si la zone d'opération et la zone confidentielle se chevauchent, ne pas générer de réponse à l'instruction de contrôle ; ou
si la zone d'opération et la zone confidentielle ne se chevauchent pas, générer une réponse à l'instruction de contrôle.

7. Procédé selon la revendication 4, le procédé comprenant en outre, après l'envoi des données d'image partageable au dispositif de réception, les étapes consistant à :
obtenir une instruction de contrôle qui est envoyée par le dispositif de réception au moyen de la connexion ;
déterminer un objet d'affichage qui correspond à l'instruction de contrôle ; et
si l'objet d'affichage qui correspond à l'instruction de contrôle comprend l'objet d'affichage confidentiel, ne pas générer de réponse à l'instruction de contrôle ; ou
si l'objet d'affichage qui correspond à l'instruction de contrôle ne comprend pas l'objet d'affichage confidentiel, générer une réponse à l'instruction de contrôle.

8. Procédé selon l'une des revendications 1 à 7, dans lequel l'image partageable est la totalité des données d'image qui correspondent à l'interface d'utilisateur.

9. Dispositif de partage, utilisé pour un partage d'écran avec un dispositif de réception, le dispositif de partage comprenant :
une unité d'affichage (501), configurée pour afficher une interface d'utilisateur d'un menu d'application ;
une unité de connexion (502), configurée pour établir avec le dispositif de réception une connexion utilisée pour le partage d'écran ;
une unité de génération (503), configurée pour déterminer des données d'image partageable, les données d'image partageable étant une partie de données d'image qui correspondent à l'interface d'utilisateur ; et
une unité d'envoi (504), configurée pour envoyer les données d'image partageable au dispositif de réception au moyen de la connexion, de sorte que le dispositif de réception affiche l'interface d'utilisateur du menu d'application selon les données d'image partageable ;
le dispositif de partage étant **caractérisé en ce que** :
l'unité de génération (503) étant spécifiquement configurée pour : quand une condition de déclenchement prédéterminée est satisfaite, déterminer les données d'image partageable, la condition de déclenchement prédéterminée comprenant l'opération consistant à :
déterminer qu'un nombre de dispositifs de réception qui ont établi une connexion avec le dispositif de partage dépasse une valeur prédéterminée ;
le dispositif comprenant en outre :
une unité d'obtention, configurée pour obtenir une instruction de contrôle qui est envoyée par le dispositif de réception au moyen de la connexion, après l'envoi, par l'unité d'envoi, des données d'image partageable au dispositif de réception ; et
une unité de réponse, configurée pour : quand l'instruction de contrôle satisfait à une condition confidentielle prédéterminée, générer une réponse à l'instruction de contrôle.
